(19) Europäisches Patentamt
European Patent Office
Office européen des brevets

(11) EP 3 128 259 A1

(12) EUROPEAN PATENT APPLICATION
published in accordance with Art. 153(4) EPC

(43) Date of publication:
08.02.2017 Bulletin 2017/06

(51) Int Cl.:
F25B 1/00 (2006.01)  C09K 5/04 (2006.01)

(21) Application number: 14886307.9

(22) Date of filing: 17.03.2014

(86) International application number:
PCT/JP2014/001483

(87) International publication number:
WO 2015/140827 (24.09.2015 Gazette 2015/38)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicants:
• Mitsubishi Electric Corporation
Chiyoda-ku
Tokyo 100-8310 (JP)
• Asahi Glass Company, Limited
Tokyo 100-8405 (JP)

(72) Inventors:
• HORIIKE, Shinya
Tokyo 100-8310 (JP)
• MORIMOTO, Hiroyuki
Tokyo 100-8310 (JP)
• SATA, Hiroshi
Tokyo 100-8310 (JP)

(74) Representative: Pfenning, Meinig & Partner mbB
Patent- und Rechtsanwälte
Theresienhöhe 11a
80339 München (DE)

(54) HEAT PUMP DEVICE

(57) It is an object of the present invention to provide an inexpensive heat pump apparatus in which HFO-1123 circulates.

The present invention provides a heat pump apparatus in which refrigerant circulates between an indoor unit and an outdoor unit, wherein the refrigerant is a mixed refrigerant of HFO-1123 and an HFC refrigerant other than HFO-1123, the outdoor unit has a cooling capacity (kW) in the range of 2.2 to 9.5 kW, the outer diameter $\phi$ (mm) of a gas pipe between the indoor unit and the outdoor unit and the cooling capacity (kW) of the outdoor unit satisfy the relation ($1.00 \leq$ outer diameter $\phi$ (mm) of gas pipe/cooling capacity (kW) of outdoor unit $\leq 5.77$), and the outer diameter $\phi$ (mm) of a liquid pipe between the indoor unit and the outdoor unit and the cooling capacity (kW) of the outdoor unit satisfy the relation ($0.67 \leq$ outer diameter $\phi$ (mm) of liquid pipe/cooling capacity (kW) of outdoor unit $\leq 5.77$).

FIG. 1

## Description

### Technical Field

The present invention relates to an air-conditioning apparatus to which a refrigerant having lower global warming potential (GWP) than R410A is applied.

### Background Art

Known air-conditioning apparatus utilize heat pump cycles with HFC refrigerant R410A. As global warming has become an increasingly serious environmental issue, however, refrigerants having lower global warming potential than R410A are being developed. Refrigerants with lower GWP than R410A (GWP: 2000) may be HFC32 (difluoromethane), HFO-1234yf (2,3,3,3-tetrafluoropropane), and HFO-1123 (1,1,2-trifluoroethylene).

HFO stands for hydrofluoroolefin, and HFC stands for hydrofluorocarbon.

In particular, HFO-1123 (GWP100: 0.3) has lower GWP than HFC32 (GWP100: 675) and HFO-1234yf (GWP100: 4). Thus, in view of global warming issues, air-conditioning apparatus that utilize HFO-1123 are under study.

### Citation List

#### Patent Literature

Patent Literature 1: International Publication No. WO 2012/157764 A1

### Summary of Invention

#### Technical Problem

However, a decomposition reaction of HFO-1123 may induce a subsequent series of decomposition reactions. To withstand pressure increase in a refrigerant pipe caused by the series of decomposition reactions, the outer diameter of the refrigerant pipe must be increased to reduce the pressure in the refrigerant pipe. However, an increased outer diameter of refrigerant pipes results in increased costs of the refrigerant pipes.

It is an object of the present invention to provide an inexpensive air-conditioning apparatus to which HFO-1123 is applied.

#### Solution to Problem

The present invention provides a heat pump apparatus including:

an indoor unit;
an outdoor unit having a cooling capacity (kW) in the range of 2.2 to 9.5 kW;

a refrigerant circulating between the indoor unit and the outdoor unit, the refrigerant being a mixed refrigerant of HFO-1123 and an HFC refrigerant other than HFO-1123;
a gas pipe communicating between the indoor unit and the outdoor unit; and
a liquid pipe communicating between the indoor unit and the outdoor unit,

the gas pipe and the outdoor unit being configured to satisfy the following formula (1), and the liquid pipe and the outdoor unit being configured to satisfy the following formula (2):

(1) 1.00 $\leq$ an outer diameter $\phi$ (mm) of the gas pipe/the cooling capacity (kW) of the outdoor unit $\leq$ 5.77
(2) 0.67 $\leq$ an outer diameter $\phi$ (mm) of the liquid pipe/the cooling capacity (kW) the of outdoor unit $\leq$ 5.77

The present invention provides heat pump apparatus including

a plurality of indoor units;
at least one outdoor unit having a cooling capacity (kW) of 10 kW or more and less than 40 kW;
a refrigerant circulating between the plurality of indoor units and the at least one outdoor unit, the refrigerant being a mixed refrigerant of HFO-1123 and an HFC refrigerant other than HFO-1123;
a main gas pipe communicating between the plurality of indoor units and the at least one outdoor unit; and
a main liquid pipe communicating between the plurality of indoor units and the at least one outdoor unit,

the main gas pipe and the at least one outdoor unit being configured to satisfy the following formula (1), and the liquid pipe and the at least one outdoor unit being configured to satisfy the following formula (2):

(1) 0.40 $\leq$ an outer diameter $\phi$ (mm) of the main gas pipe/the cooling capacity (kW) of the at least one outdoor unit $\leq$ 3.49
(2) 0.16 $\leq$ an outer diameter $\phi$ (mm) of the main liquid pipe/the cooling capacity (kW) of the at least one outdoor unit $\leq$ 1.91

The present invention provides a heat pump apparatus including:

a plurality of indoor units;
at least two outdoor units, the at least two outdoor units having a total cooling capacity (kW) of 40 kW or more and less than 70 kW;
a refrigerant circulating between the plurality of indoor units and the at least two outdoor units, the refrigerant being a mixed refrigerant of HFO-1123 and an HFC refrigerant other than HFO-1123; a main gas pipe communicating between the plurality of indoor units and the at least two outdoor units; and a main liquid pipe comunicating between the plurality of indoor units and the at least two outdoor units,

the main gas pipe and the at least two outdoor units being configured to satisfy the folloinwg formula (1), and the main liquid pipe and the at least two outdoor units being confiugred to satisfy the following formula (2):

(1) $0.32 \leq$ an outer diameter $\phi$ (mm) of the main gas pipe/ the total cooling capacity (kW) of the at least two outdoor units $\leq 1.11$
(2) $0.14 \leq$ an outer diameter $\phi$ (mm) of the main liquid pipe/cooling capacity (kW) of the at least two outdoor units $\leq 0.56$

The present invention provides a heat pump apparatus including:

a plurality of indoor units; at least three outdoor units having a total cooling capacity (kW) of 70 kW or more and less than 100 kW; a refrigerant circulating between the plurality of indoor units and the at least three outdoor units, the refrigerant being a mixed refrigerant of HFO-1123 and an HFC refrigerant other than HFO-1123; a main gas pipe communicating between the plurality of indoor units and the at least three outdoor units; and a liquid pipe communicating between the plurality of indoor units and the at least three outdoor units,

the main gas pipe and the at least three outdoor units being configured to satisfy the following formula (1), and the liquid pipe and the at least three outdoor units being confiugured to satisfy the following formula (2):

(1) $0.25 \leq$ an outer diameter $\phi$ (mm) of the main gas pipe /the total cooling capacity (kW) of the plurality of indoor units $\leq 0.73$
(2) $0.13 \leq$ an outer diameter $\phi$ (mm) of the liquid pipe /the total cooling capacity (kW) of the plurality of indoor units $\leq 0.36$

Advantageous Effects of Invention

The present invention can provide an inexpensive air-conditioning apparatus that utilizes HFO-1123 by using gas pipes and liquid pipes depending on the cooling capacity of an outdoor unit.

Brief Description of Drawings

[Fig. 1] Fig. 1 is a refrigerant circuit diagram of a heat pump apparatus 100 according to Embodiment 1.
[Fig. 2] Fig. 2 is a chemical formula of a decomposition reaction of HFO-1123.
[Fig. 3] Fig. 3 is a table showing the relationship between cooling capacity and the types of gas pipes and liquid pipes usable in the heat pump apparatus 100 according to Embodiment 1.
[Fig. 4] Fig. 4 is a table showing the relationship of the outer diameter $\phi$ (mm) of gas pipes and liquid pipes/cooling capacity (kW) in the heat pump apparatus 100 according to Embodiment 1.
[Fig. 5] Fig. 5 is a refrigerant circuit diagram of a heat pump apparatus 200 according to Embodiment 2.
[Fig. 6] Fig. 6 is a table showing the relationship between cooling capacity and the types of gas pipes and liquid pipes usable in the heat pump apparatus 200 according to Embodiment 2.
[Fig. 7] Fig. 7 is a table showing the relationship of the outer diameter $\phi$ (mm) of gas pipes and liquid pipes/cooling capacity (kW) in the heat pump apparatus 200 according to Embodiment 2.
[Fig. 8] Fig. 8 is a refrigerant circuit diagram of a heat pump apparatus 300 according to Embodiment 3.
[Fig. 9] Fig. 9 is a table showing the relationship between cooling capacity and the types of gas pipes and liquid pipes usable in the heat pump apparatus 300 according to Embodiment 3.
[Fig. 10] Fig. 10 is a table showing the relationship of the outer diameter $\phi$ (mm) of gas pipes and liquid pipes/cooling capacity (kW) in the heat pump apparatus 300 according to Embodiment 3.
[Fig. 11] Fig. 11 is a table showing the relationship between cooling capacity and the types of gas pipes and liquid pipes usable in another embodiment of the heat pump apparatus according to Embodiment 3.
[Fig. 12] Fig. 12 is a table showing the relationship of the outer diameter $\phi$ (mm) of gas pipes and liquid pipes/cooling capacity (kW) in another embodiment of the heat pump apparatus according to Embodiment 3.

Description of Embodiments

In the present invention (Embodiments 1 to 3), hydrofluorocarbon (HFC) refrigerants are hydrocarbons having fluorine (F) and no chlorine (Cl) in their molecular structures. Hydrofluoroolefin (HFO) refrigerants are hydrocarbons having fluorine and no chlorine in their molecular structures and further have a carbon-carbon double bond. HFO refrigerants are included in HFC refrigerants.

Embodiment 1

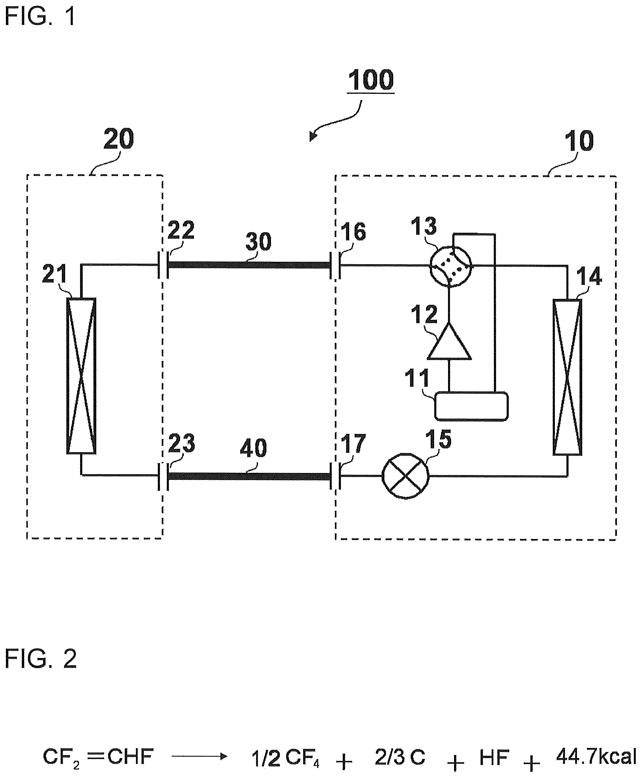

Fig. 1 illustrates a refrigerant circuit of a heat pump apparatus 100 according to Embodiment 1. The refrigerant circuit of the heat pump apparatus 100 will be described below with reference to Fig. 1.

(Refrigerant Circuit of Heat pump apparatus 100)

The heat pump apparatus 100 is an air-conditioning apparatus that can be switched between cooling operation and heating operation.

The heat pump apparatus 100 includes an outdoor unit 10 and an indoor unit 20. The outdoor unit 10 is placed outdoors, and the indoor unit 20 is placed in a room to be air-conditioned. The outdoor unit 10 includes an accumulator 11, a compressor 12, a four-way valve 13, an outdoor heat exchanger 14, a gas pipe joint 16, and a liquid pipe joint 17. The indoor unit 20 includes an indoor heat exchanger 21, a gas pipe joint 22, and a liquid pipe joint 23. The outdoor unit 10 and the indoor unit 20 are connected through the gas pipe 30 and the liquid pipe 40. The gas pipe 30 is coupled to the gas pipe joint 16 and the gas pipe joint 22. The liquid pipe 40 is connected to the liquid pipe joint 17 and the liquid pipe joint 23.

The accumulator 11 contains liquid refrigerant and gas refrigerant. The gas refrigerant is sucked into the compressor 12. High-temperature low-pressure gas refrigerant sucked into the compressor 12 is compressed and is discharged as a high-temperature high-pressure gas refrigerant.

The refrigerant flow path can be changed with the four-way valve 13 to switch between a flow path for cooling operation and a flow path for heating operation.

Although the heat pump apparatus 100 according to Embodiment 1 includes the accumulator 11, the accumulator 11 is not necessarily required.

(Refrigerant Flow in Heating Operation)

First, a refrigerant flow in heating operation will be described below. A high-temperature high-pressure gas refrigerant discharged from the compressor 12 flows into the four-way valve 13. The high-temperature high-pressure gas refrigerant flows through the four-way valve 13, the gas pipe joint 16, the gas pipe 30, and the gas pipe joint 22 into the indoor heat exchanger 21. The high-temperature high-pressure gas refrigerant exchanges heat with indoor air in the indoor heat exchanger 21 and becomes a low-temperature high-pressure liquid refrigerant. The low-temperature high-pressure liquid refrigerant from the indoor heat exchanger 21 flows through the liquid pipe joint 23, the liquid pipe 40, and the liquid pipe joint 17 into an expansion valve 15. The low-temperature high-pressure liquid refrigerant is depressurized by the expansion valve 15 and becomes a low-temperature low-pressure two-phase gas-liquid refrigerant. The low-temperature low-pressure two-phase gas-liquid refrigerant from the expansion valve 15 flows into the outdoor heat exchanger 14. The low-temperature low-pressure two-phase gas-liquid refrigerant exchanges heat with outdoor air in the outdoor heat exchanger 14 and becomes a high-temperature low-pressure gas refrigerant. The high-temperature low-pressure gas refrigerant from the outdoor heat exchanger 14 flows through the four-way valve 13 into the accumulator 11.

(Refrigerant Flow in Cooling Operation)

Next, a refrigerant flow in cooling operation will be described below. A high-temperature high-pressure gas refrigerant discharged from the compressor 12 flows through the four-way valve 13 into the outdoor heat exchanger 14. The high-temperature high-pressure gas refrigerant exchanges heat with outdoor air in the outdoor heat exchanger 14 and becomes a low-temperature high-pressure liquid refrigerant. The low-temperature high-pressure liquid refrigerant from the outdoor heat exchanger 14 flows into the expansion valve 15. The low-temperature high-pressure liquid refrigerant is depressurized by the expansion valve 15 and becomes a low-temperature low-pressure two-phase gas-liquid refrigerant. The low-temperature low-pressure two-phase gas-liquid refrigerant from the expansion valve 15 flows through the liquid pipe joint 17, the liquid pipe 40, and the liquid pipe joint 23 into the indoor heat exchanger 21. The low-temperature low-pressure two-phase gas-liquid refrigerant exchanges heat with indoor air in the indoor heat exchanger 21 and becomes a high-temperature low-pressure gas refrigerant. The high-temperature low-pressure gas refrigerant from the indoor heat exchanger 21 flows through the gas pipe joint 22, the gas pipe 30, the gas pipe joint 16, and the four-way valve 13 into the accumulator 11.

In heating operation, a high-temperature high-pressure gas refrigerant flows through the gas pipe 30, and in cooling operation, a high-temperature low-pressure gas refrigerant flows through the gas pipe 30.

In heating operation, low-temperature high-pressure liquid refrigerant flows through the liquid pipe 40, and in cooling operation, low-temperature low-pressure two-phase gas-liquid refrigerant flows through the liquid pipe 40.

(Refrigerant)

A refrigerant used in the present invention (Embodiments 1 to 3) will be described below. In the present invention, a refrigerant circulating through the heat pump apparatus is HFO-1123.

HFO-1123 has a GWP100 of 0.4, which is much lower than those of R410A and HFC32, and is preferred in terms of global warming mitigation. When HFO-1123 is applied to heat pump apparatus, however, HFO-1123 may cause a decomposition reaction, and problems resulting from the decomposition reaction must be solved.

Fig. 2 shows a decomposition reaction formula of HFO-1123. The decomposition reaction is a disproportionation reaction in which 1 mol of HFO-1123 yields 1/2 mol of carbon tetrafluoride ($CF_4$), 2/3 mol of carbon (C), and 1 mol of hydrogen fluoride (HF). The decomposition reaction is also an exothermic reaction in which 1 mol of HFO-1123 generates approximately 45 kcal of heat.

Use of high-purity HFO-1123 may cause a series of decomposition reactions once HFO-1123 decomposes. Thus, a decomposition reaction of HFO-1123 may increase refrigerant pressure beyond expectations in a refrigerant pipe. Furthermore, HFO-1123 is slightly flammable, and leakage of high-temperature HFO-1123 from a pipe may cause a fire.

A decomposition reaction of HFO-1123 yields hydrogen fluoride (HF). Hydrogen fluoride dissolved in water produces acidic hydrofluoric acid. Hydrofluoric acid may corrode an inner surface of a refrigerant pipe. In particular, the acidity of hydrofluoric acid increases with decreasing temperature. Thus, the liquid pipe 40 through which a low temperature refrigerant flows may be corroded.

When HFO-1123 is used in heat pump apparatus, therefore, these problems resulting from the decomposition reaction must be addressed; more specifically, pressure increase in refrigerant pipes and corrosion of pipes must be prevented. Although these problems may be addressed by using pipes having a large thickness and outer diameter, use of such pipes undesirably increases the cost of heat pump apparatus.

In the present invention, a mixed refrigerant of HFO-1123 and an HFC refrigerant other than HFO-1123 is used to prevent pressure increase in refrigerant pipes and corrosion of pipes. The addition of an HFC refrigerant (other than HFO-1123) to HFO-1123 can suppress the decomposition reaction of HFO-1123 compared with the addition of a natural refrigerant, such as carbon dioxide or propane.

In particular, the addition of a refrigerant HFO-1234yf or HFC32 to HFO-1123 can further suppress a series of decomposition reactions of HFO-1123 compared with the addition of other HFC refrigerants and HFO refrigerants. It is desirable to add HFC32 rather than HFO-1234yf in view of the energy efficiency of heat pump apparatus.

Suppression of the decomposition reaction of HFO-1123 can obviate the need to prevent pressure increase in refrigerant pipes and corrosion of pipes.

In the present invention, a particular refrigerant is mixed with HFO-1123 to prevent the decomposition reaction of HFO-1123, and pipes having an outer diameter optimum for the mixed refrigerant are selected. The outer diameter of selected pipes will be described later.

(Refrigerating Machine Oil)

In heat pump apparatus, refrigerating machine oil is mixed with refrigerant as lubricating oil for lubricating slide portions of compressors. In the present invention (Embodiments 1 to 3), it is desirable to use an ether lubricating oil or an ester lubricating oil as a refrigerating machine oil to prevent corrosion of pipes caused by hydrogen fluoride produced by the decomposition reaction of HFO-1123.

In general, ether lubricating oils and ester lubricating oils are hygroscopic and are likely to produce sludge due to hydrolysis, and are therefore sometimes difficult to use in heat pump apparatus in consideration of the reliability of compressors. However, hydrolysis of ether lubricating oils and ester lubricating oils can remove water from pipes and thereby reduce the proportion of hydrogen fluoride that dissolves in water and produces hydrofluoric acid. This can suppress corrosion of pipes caused by hydrogen fluoride.

Specific examples of ether lubricating oils and ester lubricating oils will be described later.

(Diameter and Thickness of Pipes)

The relationship between the pipe diameter of gas pipes and liquid pipes and the cooling capacity of the outdoor unit in the heat pump apparatus 100 according to Embodiment 1 will be described below.

The outer diameter $\phi$ (pipe diameter) and required thickness t of pipes in heat pump apparatus are generally given by the following mathematical formula (1).

$$t = P\phi/(2\sigma a\eta + 0.8P) \qquad (1)$$

t: required thickness (mm)
$\phi$: outer diameter of pipe (mm)
$\sigma a$: allowable tensile stress (N/mm$^2$)
P: design pressure (MPa)
$\eta$: efficiency of welded joint

The design pressure P refers to a pressure that depends on the type of refrigerant, the amount of refrigerant, and the maximum pressure in refrigerant circuit operation, and provides a standard for the pressure resistance of the product.

The efficiency $\eta$ of welded joints is a dimensionless number specified in Japanese Industrial Standards "JIS B 8265 Construction of pressure vessel". For example, welded joints in the form of "one side full thickness fillet welded lap joint without plug welding" have an efficiency $\eta$ of 0.45.

For example, in consideration of pressure increase in refrigerant pipes due to heat generated by a series of decomposition reactions, the outer diameter $\phi$ of pipes must be larger in the case of HFO-1123 than in the case of R410A, which does not cause a series of decomposition reactions. In consideration of the production of hydrogen fluoride in the decomposition reaction, the required thickness t of pipes must be greater in the case of HFO-1123 than in the case of R410A.

The design pressure P or the efficiency $\eta$ of

welded joints may be increased to prevent the outer diameter $\phi$ and the required thickness t of pipes from being increased. However, a higher design pressure P results in an increased cost of a design change to improve the safety of the compressor 12. To yield higher efficiency $\eta$ of welded joints, increased labor costs are necessary, due to a lot of time and effort to perform welding. It may be impossible to increase the efficiency $\eta$ of welded joints in some welding methods.

Thus, it is desirable that designers design pipes on the assumption that there is no decomposition reaction of HFO-1123.

(Cooling Capacity)

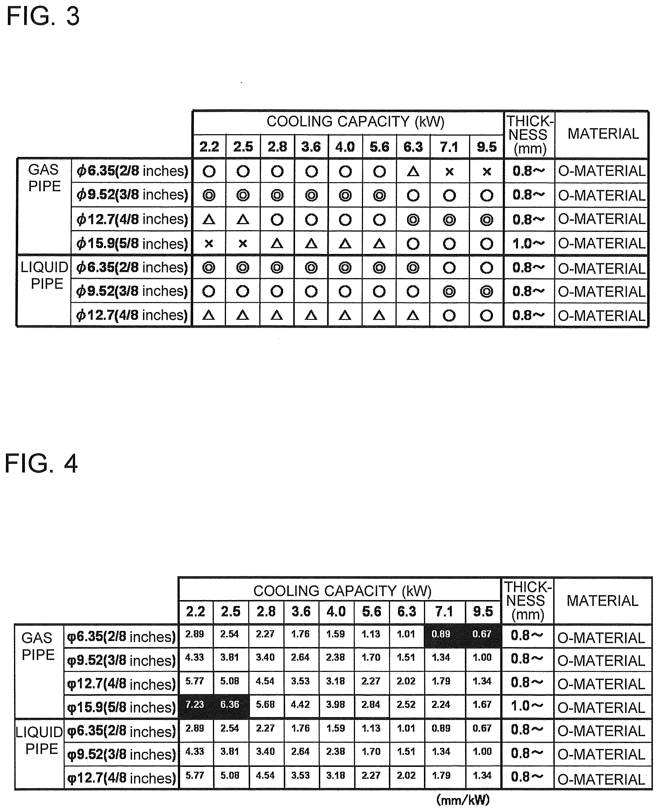

Fig. 3 is a table showing the relationship between cooling capacity and the types of gas pipe and liquid pipe of the heat pump apparatus 100.

The cooling capacity refers to the heat exchange capacity (kW) of the outdoor unit 10 in cooling operation measured under the following conditions (temperature conditions for mild climatic zone) specified in Japanese Industrial Standards "JIS B 8615-1 ".

Indoor side inlet air temperature: 27 degrees C (dry-bulb temperature), 19 degrees C (wet-bulb temperature)
Outdoor side inlet air temperature: 35 degrees C (dry-bulb temperature)

(Fig. 3)

Fig. 3 shows the outer diameters $\phi$ (mm) of the gas pipe 30 and the liquid pipe 40 usable depending on the cooling capacity of the outdoor unit 10 according to Embodiment 1. The cooling capacity of the outdoor unit 10 depends on the performance of the compressor 12, the size of the outdoor heat exchanger 14, the amount of refrigerant to be supplied, and other parameters. The design pressure of the heat pump apparatus 100 depends on the cooling capacity of the outdoor unit 10. In Fig. 3, in consideration of design pressure for a mixed refrigerant of equal weights of HFO-1123 and HFC32, the possible outer diameters of the gas pipe 30 and the liquid pipe 40 are determined on the basis of the mathematical formula (1). It is desirable that the percentage of HFC32 to be mixed be 20% or more by weight and 60% or less by weight. The percentage of HFC32 to be mixed in Embodiments 2 and 3 is the same as in Embodiment 1.

The symbols in Fig. 3 (double circle, circle, triangle, and cross) are as follows:

"Double circle" Most desirably used
"Circle" Desirably used
"Triangle" Usable
"Cross" Unusable

Thus, it is desirable to use the pipes in the order of "double circle" > "circle" > "triangle" > "cross".

The outer diameters $\phi$ (mm) in Fig. 3 are rounded to three significant figures. Correctly speaking, $\phi$15.9 refers to $\phi$15.88. Pipes to be used are made of phosphorus deoxidized copper.

For example, when the outdoor unit 10 has a cooling capacity of 2.2 kW, a pipe to be used as the gas pipe 30 most desirably has an outer diameter $\phi$ of 9.52 mm ($\phi$ is hereinafter omitted) (corresponding to "double circle"), more desirably 6.35 mm (corresponding to "circle"), desirably 12.7 mm (corresponding to "triangle"). A pipe having an outer diameter of 15.9 mm or more cannot be used. A pipe to be used as the liquid pipe 40 most desirably has an outer diameter of 6.35 mm (corresponding to "double circle"), more desirably 9.52 mm (corresponding to "circle"), desirably 12.7 mm (corresponding to "triangle"). The outdoor unit 10 having a cooling capacity of 2.5 kW has the same results as the outdoor unit 10 having a cooling capacity of 2.2 kW.

When the outdoor unit 10 has a cooling capacity in the range of 2.8 to 5.6 kW, a pipe to be used as the gas pipe 30 most desirably has an outer diameter of 9.52 mm (corresponding to "double circle"), second most desirably 6.35 or 12.7 mm (corresponding to "circle"), third most desirably 15.9 mm (corresponding to "triangle"). The liquid pipe 40 has the same results as in the case of a cooling capacity of 2.2 or 2.5 kW.

When the outdoor unit 10 has a cooling capacity of 6.3 kW, a pipe to be used as the gas pipe 30 most desirably has an outer diameter of 12.7 mm (corresponding to "double circle"), second most desirably 9.52 or 15.9 mm (corresponding to "circle"), third most desirably 6.53 mm (corresponding to "triangle"). The liquid pipe 40 has the same results as in the case of a cooling capacity of 2.2 or 2.5 kW.

When the outdoor unit 10 has a cooling capacity in the range of 7.1 to 9.5 kW, a pipe to be used as the gas pipe 30 most desirably has an outer diameter of 12.7 mm (corresponding to "double circle"), second most desirably 9.52 or 15.9 mm (corresponding to "circle"). The liquid pipe 40 most desirably has an outer diameter of 9.52 mm (corresponding to "double circle"), second most desirably 6.35 or 12.7 mm (corresponding to "circle").

(Fig. 4)

As described above, the outer diameters of pipes to be desirably used as the gas pipe 30 and the liquid pipe 40 increase with increasing cooling capacity. Fig. 4 shows the ratios (mm/kW) of the outer diameters of the gas pipe 30 and the liquid pipe 40 to cooling capacity.

The ratio (mm/kW) of the outer diameter of the gas pipe 30 to cooling capacity desirably ranges from 1.00 to 5.77 (corresponding to "double circle", "circle", or "triangle"), more desirably 1.00 to 4.54 (corresponding to "double circle" or "circle"), most desirably 1.34 to 4.33 (corresponding to "double circle"). Thus, the outer diameter of the gas pipe 30 is chosen such that the ratio (mm/kW) of the outer diameter to the cooling capacity of the outdoor unit 10 ranges from 0.67 to 5.77.

Likewise, the ratio (mm/kW) of the outer diameter of the liquid pipe 40 to cooling capacity desirably ranges from 0.67 to 5.77 (corresponding to "double circle", "circle", or "triangle"), more desirably 0.67 to 4.33 (corresponding to "double circle" or "circle"), most desirably 1.00 to 2.89 (corresponding to "double circle"). Thus, the outer diameter of the liquid pipe 40 is chosen such that the ratio (mm/kW) of the outer diameter to the cooling capacity of the outdoor unit 10 ranges from 1.00 to 5.77.

Thus, an HFC refrigerant, particularly HFO-1234yf in the case of HFO refrigerants or HFC32 in the case of HFC refrigerants, is mixed to suppress the decomposition reaction of HFO-1123. The optimum outer diameters of pipes to be used as the gas pipe 30 and the liquid pipe 40 can be chosen on the assumption that the decomposition reaction of HFO-1123 is suppressed, and this can reduce the cost of the heat pump apparatus 100.

Embodiment 2

Although the heat pump apparatus 100 described in Embodiment 1 includes one indoor unit coupled to one outdoor unit, a heat pump apparatus 200 described in Embodiment 2 includes a plurality of indoor units coupled to one outdoor unit.

The heat pump apparatus 200 includes three indoor units 20A, 20B, and 20C coupled to one outdoor unit 10A.

The outdoor unit 10A includes no expansion valve, and the indoor units 20A, 20B, and 20C include expansion valves 24a, 24b, and 24c, respectively.

The gas pipes of the heat pump apparatus 200 are composed of a main gas pipe 30a, a gas pipe 31, a gas pipe 32a, a gas pipe 32b, and a gas pipe 32c.

The liquid pipes of the heat pump apparatus 200 are composed of a main liquid pipe 40a, a liquid pipe 41, a liquid pipe 42a, a liquid pipe 42b, and a liquid pipe 42c.

The main gas pipe 30a, the gas pipe 31, the gas pipe 32a, the gas pipe 32b, and the gas pipe 32c are coupled together with a branch joint 50a and a branch joint 50b. The main liquid pipe 40a, the liquid pipe 41, the liquid pipe 42a, the liquid pipe 42b, and the liquid pipe 42c are coupled together with a branch joint 55a and a branch joint 55b.

The branch joint 50a, the branch joint 50b, the branch joint 55a, and the branch joint 55b are three-way branch joints each having opening ports in three directions.

The three opening ports of the branch joint 50a are coupled to the main gas pipe 30a, the gas pipe 31, and the gas pipe 32a.

The three opening ports of the branch joint 50b are coupled to the gas pipe 31, the gas pipe 32c, and the gas pipe 32b.

The three opening ports of the branch joint 55a are coupled to the main liquid pipe 40a, the liquid pipe 41, and the liquid pipe 42a.

The three opening ports of the branch joint 55b are coupled to the liquid pipe 41, the liquid pipe 42c, and the liquid pipe 42b.

The gas pipe 32a is coupled to a gas pipe joint 22a of the indoor unit 20A, the gas pipe 32b is coupled to the gas pipe joint 22b of the indoor unit 20B, and the gas pipe 32c is coupled to the gas pipe joint 22c of the indoor unit 20C.

The liquid pipe 42a is coupled to the liquid pipe joint 23a of the indoor unit 20A, the liquid pipe 42b is coupled to the liquid pipe joint 23b of the indoor unit 20B, and the liquid pipe 42c is coupled to the liquid pipe joint 23c of the indoor unit 20C.

First, a refrigerant flow in heating operation will be described below. A high-temperature high-pressure gas refrigerant discharged from a compressor 12a flows into a four-way valve 13a. The high-temperature high-pressure gas refrigerant flows from the four-way valve 13a to the gas pipe joint 16a, the main gas pipe 30a, and the branch joint 50a. The refrigerant is divided by the branch joint 50a into the gas pipe 32a and the gas pipe 31. The refrigerant flowing through the gas pipe 31 is divided by the branch joint 50b into the gas pipe 32b and the gas pipe 32c. The high-temperature high-pressure gas refrigerant flows through the gas pipes 32a, 32b, and 32c and the gas pipe joint 22a, the gas pipe joint 22b, and the gas pipe joint 22c into indoor heat exchangers 21 a, 21 b, and 21c of the indoor units 20A, 20B, and 20C. The high-temperature high-pressure gas refrigerant exchanges heat in the indoor heat exchangers 21 a, 21 b, and 21c and becomes a low-temperature high-pressure liquid refrigerant, and is depressurized by the expansion valves 24a, 24b, and 24c and becomes a low-temperature high-pressure two-phase gas-liquid refrigerant.

The low-temperature high-pressure two-phase gas-liquid refrigerant from the expansion valve 24a flows through the liquid pipe 42a, the branch joint 55a, the main liquid pipe 40a, and the liquid pipe joint 17a into an outdoor heat exchanger 14a.

The low-temperature high-pressure two-phase gas-liquid refrigerant from the expansion valve 24b flows through the liquid pipe 42b, the branch joint 55b, the liquid pipe 41, the branch joint 55a, the main liquid pipe 40a, and the liquid pipe joint 17a into the outdoor heat exchanger 14a.

The low-temperature high-pressure two-phase gas-liquid refrigerant from the expansion valve 24c flows through the liquid pipe 42c, the branch joint 55b, the liquid pipe 41, the branch joint 55a, the main liquid pipe 40a, and the liquid pipe joint 17a into the outdoor heat exchanger 14a.

The low-temperature high-pressure two-phase gas-liquid refrigerant from the expansion valves 24a, 24b, and 24c exchanges heat with outdoor air in the outdoor heat exchanger 14a and becomes a high-temperature low-pressure gas refrigerant. The high-temperature low-pressure gas refrigerant from the outdoor heat exchanger 14a flows through the four-way valve 13a into an accumulator 11 a.

Next, a refrigerant flow in cooling operation will be described below. A high-temperature high-pressure gas refrigerant discharged from the compressor 12a flows through the four-way valve 13a into the outdoor heat exchanger 14a. The high-temperature high-pressure gas refrigerant exchanges heat with outdoor air in the outdoor heat exchanger 14a and becomes a low-temperature high-pressure liquid refrigerant. The low-temperature high-pressure liquid refrigerant from the outdoor heat exchanger 14a flows through the liquid pipe joint 17a and the main liquid pipe 40a into the branch joint 55a. The refrigerant is divided by the branch joint 55a into the liquid pipe 41 and the liquid pipe 42a. The refrigerant flowing through the liquid pipe 41 is divided by the branch joint 55b into the liquid pipe 42b and the liquid pipe 42c. The low-temperature high-pressure liquid refrigerant flows through the liquid pipe 42a, the liquid pipe 42b, and the liquid pipe 42c and the liquid pipe joint 23a, the liquid pipe joint 23b, and the liquid pipe joint 23c into the expansion valve 24a, the expansion valve 24b, and the expansion valve 24c. The low-temperature high-pressure liquid refrigerant are depressurized by the expansion valve 24a, the expansion valve 24b, and the expansion valve 24c and becomes a low-temperature low-pressure two-phase gas-liquid refrigerant. The low-temperature low-pressure two-phase gas-liquid refrigerant from the expansion valve 24a, the expansion valve 24b, and the expansion valve 24c flows into the indoor heat exchanger 21 a, the indoor heat exchanger 21 b, and the indoor heat exchanger 21 c, exchanges heat with indoor air, and becomes a high-temperature low-pressure gas refrigerant.

The high-temperature low-pressure gas refrigerant from the indoor heat exchanger 21 a flows through the gas pipe joint 22a, the gas pipe 32a, the branch joint 50a, and the main gas pipe 30a.

The high-temperature low-pressure gas refrigerant from the indoor heat exchanger 21 b flows through the gas pipe joint 22b, the gas pipe 32b, the branch joint 50b, the gas pipe 31, the branch joint 50a, and the main gas pipe 30a.

The high-temperature low-pressure gas refrigerant from the indoor heat exchanger 21 c flows through the gas pipe joint 22c, the gas pipe 32c, the gas pipe 32c, the branch joint 50b, the gas pipe 31, the branch joint 50a, and the main gas pipe 30a.

The high-temperature low-pressure gas refrigerant flowing through the main gas pipe 30a flows through the gas pipe joint 16a and the four-way valve 13a into the accumulator 11 a.

In heating operation, a high-temperature high-pressure gas refrigerant flows through the main gas pipe 30a, and in cooling operation, a high-temperature low-pressure gas refrigerant flows through the main gas pipe 30a.

In heating operation, a low-temperature high-pressure two-phase gas-liquid refrigerant flows through the main liquid pipe 40a, and in cooling operation, low-temperature high-pressure liquid refrigerant flows through the main liquid pipe 40a.

In Embodiment 2, the outer diameter and thickness of the main gas pipe 30a and the main liquid pipe 40a satisfy the following conditions.

Outer diameter $\phi$ (mm) of main gas pipe 30a > Outer diameter $\phi$ (mm) of gas pipe 31
Outer diameter $\phi$ (mm) of main liquid pipe 40a > Outer diameter $\phi$ (mm) of liquid pipe 41
Thickness (mm) of main gas pipe 30a > Thickness (mm) of gas pipe 31
Thickness (mm) of main liquid pipe 40a > Thickness (mm) of liquid pipe 41

The amount of refrigerant flowing through the main gas pipe 30a into the gas pipe 31 is decreased by the amount of refrigerant flowing through the branch joints 50a and 55a into the indoor unit 20A. Thus, the gas pipe 31 can have a smaller outer diameter and thickness than the main gas pipe 30a. Likewise, the amount of refrigerant flowing through the main liquid pipe 40a into the liquid pipe 41 is decreased by the amount of refrigerant flowing into the indoor unit 20A. Thus, the liquid pipe 41 can have a smaller outer diameter and thickness than the main liquid pipe 40a.

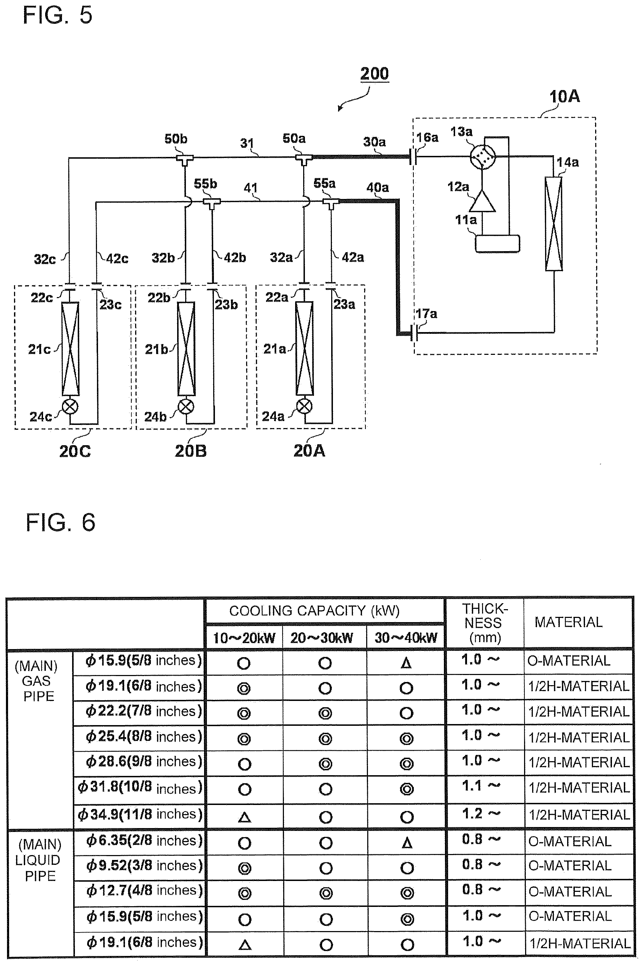

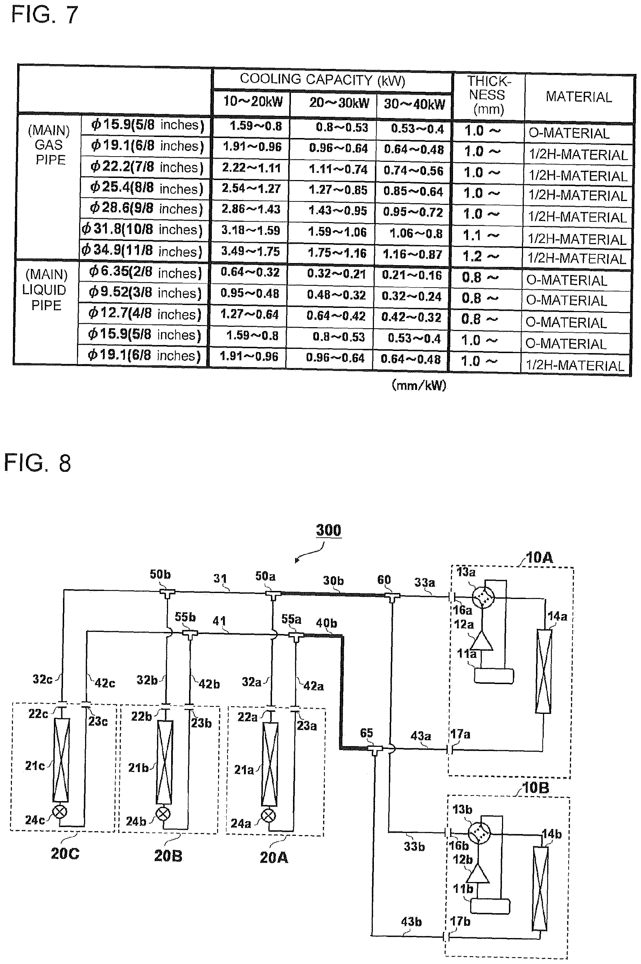

Fig. 6 shows the outer diameters $\phi$ (mm) of the main gas pipe 30a and the main liquid pipe 40a usable depending on the cooling capacity of the outdoor unit 10A according to Embodiment 2. Like Fig. 4, Fig. 7 shows the ratio (mm/kW) of the outer diameter of the main gas pipe 30a or the main liquid pipe 40a to the cooling capacity of the outdoor unit 10A.

When a plurality of indoor units 20A, 20B, and 20C are coupled to one outdoor unit 10A as in the heat pump apparatus 200, the outdoor unit 10A often has a cooling capacity of more than 10 kW. In Embodiment 2, the outer diameters of the main gas pipe 30a and the main liquid pipe 40a to be chosen in consideration of the design pressure of the heat pump apparatus 200 that includes the outdoor unit 10A having a cooling capacity of 10 kW or more and less than 40 kW will be described below with reference to Figs. 6 and 7.

(Outer Diameter of Main Gas Pipe 30a of Heat pump apparatus 200)

When the outdoor unit 10A has a cooling capacity of 10 kW or more and less than 20 kW, the main gas pipe 30a most desirably has an outer diameter of 19.1, 22.2, or 25.4 mm (corresponding to "double circle"), more desirably 15.9, 28.6, or 31.8 mm (corresponding to "circle"), desirably 34.9 mm (corresponding to "triangle").

When the outdoor unit 10A has a cooling capacity of 20 kW or more and less than 30 kW, the main gas pipe 30a most desirably has an outer diameter of 22.2, 25.4, or 28.6 mm (corresponding to "double circle"), more desirably 15.9, 19.1, 31.8, or 34.9 mm (corresponding to "circle").

When the outdoor unit 10A has a cooling capacity of 30 kW or more and less than 40 kW, the main gas pipe 30a most desirably has an outer diameter of 25.4, 28.6, or 31.8 mm (corresponding to "double circle"), more desirably 19.1, 22.2, or 34.9 mm (corresponding to "circle"), desirably 15.9 mm (corresponding to "triangle").

(Outer Diameter of Main Liquid Pipe 40a of Heat pump apparatus 200)

When the outdoor unit 10A has a cooling capacity of 10 kW or more and less than 20 kW, the main liquid pipe 40a most desirably has an outer diameter of 9.52 or 12.7 mm (corresponding to "double circle"), more desirably 6.35 or 15.9 mm (corresponding to "circle"), desirably 19.1 mm (corresponding to "triangle").

When the outdoor unit 10A has a cooling capacity of 20 kW or more and less than 30 kW, the main liquid pipe 40a most desirably has an outer diameter of 12.7 mm (corresponding to "double circle"), more desirably 6.35, 9.52, 15.9, or 19.1 mm (corresponding to "circle").

When the outdoor unit 10A has a cooling capacity of 30 kW or more and less than 40 kW, the main liquid pipe 40a most desirably has an outer diameter of 12.7 or 15.9 mm (corresponding to "double circle"), more desirably 9.52 or 19.1 mm (corresponding to "circle"), desirably 6.35 mm (corresponding to "triangle").

The outer diameters of pipes to be desirably used as the main gas pipe 30a and the main liquid pipe 40a increase with increasing cooling capacity. Fig. 7 shows the ratios (mm/kW) of the outer diameters of the main gas pipe 40a and the main liquid pipe 40a to cooling capacity.

(Fig. 7)

The ratio (mm/kW) of the outer diameter of the main gas pipe 30a to cooling capacity desirably ranges from 0.40 to 3.49 (corresponding to "double circle", "circle", or "triangle"), more desirably 0.48 to 3.18 (corresponding to "double circle" or "circle"), most desirably 0.64 to 2.54 (corresponding to "double circle"). Thus, the outer diameter of the main gas pipe 30a is chosen such that the ratio (mm/kW) of the outer diameter to the cooling capacity of the outdoor unit 10 ranges from 0.40 to 3.49.

Likewise, the ratio (mm/kW) of the outer diameter of the main liquid pipe 40a to cooling capacity desirably ranges from 0.16 to 1.91 (corresponding to "double circle", "circle", or "triangle"), more desirably 0.24 to 1.59 (corresponding to "double circle" or "circle"), most desirably 0.32 to 1.27 (corresponding to "double circle"). Thus, the outer diameter of the main liquid pipe 40a is chosen such that the ratio (mm/kW) of the outer diameter to the cooling capacity of the outdoor unit 10 ranges from 0.16 to 1.91.

Thus, an HFC refrigerant, particularly HFO-1234yf in the case of HFO refrigerants or HFC32 in the case of HFC refrigerants, is mixed to suppress the decomposition reaction of HFO-1123. The optimum outer diameters of pipes to be used as the main gas pipe 30a and the main liquid pipe 40a can be chosen on the assumption that the decomposition reaction of HFO-1123 is suppressed, and this can reduce the cost of the heat pump apparatus 200.

Embodiment 3

Although the heat pump apparatus 200 described in Embodiment 2 includes a plurality of indoor units coupled to one outdoor unit, a heat pump apparatus 300 described in Embodiment 3 includes a plurality of indoor units coupled to two outdoor units.

The heat pump apparatus 300 includes three indoor units 20A, 20B, and 20C coupled to two outdoor units 10A and 10B. The outdoor units 10A and 10B include no expansion valve, and the indoor units 20A, 20B, and 20C include expansion valves 24a, 24b, and 24c, respectively.

The gas pipes of the heat pump apparatus 300 are composed of a gas pipe 33a, a gas pipe 33b, a main gas pipe 30b, a gas pipe 31, a gas pipe 32a, and a gas pipe 32c.

The liquid pipes of the heat pump apparatus 300 are composed of a liquid pipe 43a, a liquid pipe 43b, a main liquid pipe 40b, a liquid pipe 41, a liquid pipe 42a, a liquid pipe 42b, and a liquid pipe 42c.

The gas pipe 33a, the gas pipe 33b, the main gas pipe 30b, the gas pipe 31, the gas pipe 32a, and the gas pipe 32c are coupled together with a branch joint 60, a branch joint 50a, and a branch joint 50b.

The liquid pipe 43a, the liquid pipe 43b, the main liquid pipe 40b, the liquid pipe 41, the liquid pipe 42a, the liquid pipe 42b, and the liquid pipe 42c are coupled together with a branch joint 65, a branch joint 55a, and a branch joint 55b.

Like the branch joint 50b, the branch joint 55a, and the branch joint 55b, the branch joint 60 and the branch joint 65 are three-way branch joints each having opening ports in three directions.

The three opening ports of the branch joint 50a are coupled to the main gas pipe 30b, the gas pipe 31, and the gas pipe 32a.

The three opening ports of the branch joint 50b are coupled to the gas pipe 31, the gas pipe 32c, and the gas pipe 32b.

The three opening ports of the branch joint 55a are coupled to the main liquid pipe 40b, the liquid pipe 41, and the liquid pipe 42a.

The three opening ports of the branch joint 55b are coupled to the liquid pipe 41, the liquid pipe 42c, and the liquid pipe 42b.

The three opening ports of the branch joint 60 are coupled to the main gas pipe 30b, the gas pipe 33a, and the gas pipe 33b.

The three opening ports of the branch joint 65 are coupled to the main liquid pipe 40b, the liquid pipe 43a, and the liquid pipe 43b.

The gas pipe 32a is coupled to a gas pipe joint 22a of the indoor unit 20A, the gas pipe 32b is coupled to the gas pipe joint 22b of the indoor unit 20B, and the gas pipe 32c is coupled to the gas pipe joint 22c of the indoor unit 20C.

The liquid pipe 42a is coupled to the liquid pipe joint 23a of the indoor unit 20A, the liquid pipe 42b is coupled to the liquid pipe joint 23b of the indoor unit 20B, and the liquid pipe 42c is coupled to the liquid pipe joint 23c of the indoor unit 20C.

First, a refrigerant flow in heating operation will be described below. A high-temperature high-pressure gas refrigerant discharged from the compressor 12a of the outdoor unit 10A flows into a four-way valve 13a. The high-temperature high-pressure gas refrigerant flows from the four-way valve 13a to the gas pipe joint 16a, the gas pipe 33a, the branch joint 60, the main gas pipe 30b, and the branch joint 50a. The refrigerant is divided by the branch joint 50a into the gas pipe 32a and the gas pipe 31. The refrigerant flowing through the gas pipe 31 is divided by the branch joint 50b into the gas pipe 32b and the gas pipe 32c. The high-temperature high-pressure gas refrigerant flows through the gas pipes 32a, 32b, and 32c and the gas pipe joint 22a, the gas pipe joint 22b, and the gas pipe joint 22c into indoor heat exchangers 21 a, 21 b, and 21 c of the indoor units 20A, 20B, and 20C. The high-temperature high-pressure gas refrigerant exchanges heat in the indoor heat exchangers 21 a, 21 b, and 21 c and becomes a low-temperature high-pressure liquid refrigerant, and is depressurized by the expansion valves 24a, 24b, and 24c and becomes a low-temperature high-pressure two-phase gas-liquid refrigerant.

A high-temperature high-pressure gas refrigerant discharged from the compressor 12b of the outdoor unit 10B flows through the gas pipe joint 16b and the gas pipe 33b and joins the refrigerant flowing from the outdoor unit 10A at the branch joint 60.

The low-temperature high-pressure two-phase gas-liquid refrigerant from the expansion valve 24a flows through the liquid pipe 42a, the branch joint 55a, the main liquid pipe 40b, the branch joint 65, the liquid pipe 43a, and the liquid pipe joint 17a into an outdoor heat exchanger 14a. A refrigerant branched off at the branch joint 65 flows through the liquid pipe 43b and the liquid pipe joint 17b into an outdoor heat exchanger 14b.

The low-temperature high-pressure two-phase gas-liquid refrigerant from the expansion valve 24b flows through the liquid pipe 42b, the branch joint 55b, the liquid pipe 41, the branch joint 55a, the main liquid pipe 40b, the branch joint 65, the liquid pipe 43a, and the liquid pipe joint 17a into the outdoor heat exchanger 14a. A refrigerant branched off at the branch joint 65 flows through the liquid pipe 43b and the liquid pipe joint 17b into the outdoor heat exchanger 14b.

The low-temperature high-pressure two-phase gas-liquid refrigerant from the expansion valve 24c flows through the liquid pipe 42c, the branch joint 55b, the liquid pipe 41, the branch joint 55a, the main liquid pipe 40b, the branch joint 65, the liquid pipe 43a, and the liquid pipe joint 17a into the outdoor heat exchanger 14a. A refrigerant branched off at the branch joint 65 flows through the liquid pipe 43b and the liquid pipe joint 17b into an outdoor heat exchanger 14b.

The low-temperature high-pressure two-phase gas-liquid refrigerant exchanges heat with outdoor air in the outdoor heat exchanger 14a and becomes a high-temperature low-pressure gas refrigerant. The high-temperature low-pressure gas refrigerant from the outdoor heat exchanger 14a flows through the four-way valve 13a into an accumulator 11 a. The low-temperature high-pressure two-phase gas-liquid refrigerant exchanges heat with outdoor air in the outdoor heat exchanger 14b and becomes a high-temperature low-pressure gas refrigerant. The high-temperature low-pressure gas refrigerant from the outdoor heat exchanger 14b flows through the four-way valve 13b into an accumulator 11 b.

Next, a refrigerant flow in cooling operation will be described below. A high-temperature high-pressure gas refrigerant discharged from the compressor 12a of the outdoor unit 10A flows through the four-way valve 13a into the outdoor heat exchanger 14a. The high-temperature high-pressure gas refrigerant exchanges heat with outdoor air in the outdoor heat exchanger 14a and becomes a low-temperature high-pressure liquid refrigerant. The low-temperature high-pressure liquid refrigerant from the outdoor heat exchanger 14a flows through the liquid pipe joint 17a, the liquid pipe 43a, the branch joint 65, and the main liquid pipe 40b into the branch joint 55a. The refrigerant is divided by the branch joint 55a into the liquid pipe 41 and the liquid pipe 42a. The refrigerant flowing through the liquid pipe 41 is divided by the branch joint 55b into the liquid pipe 42b and the liquid pipe 42c. The low-temperature high-pressure liquid refrigerant flows through the liquid pipe 42a, the liquid pipe 42b, and the liquid pipe 42c and the liquid pipe joint 23a, the liquid pipe joint 23b, and the liquid pipe joint 23c into the expansion valve 24a, the expansion valve 24b, and the expansion valve 24c. The low-temperature high-pressure liquid refrigerant are depressurized by the expansion valve 24a, the expansion valve 24b, and the expansion valve 24c and becomes a low-temperature low-pressure two-phase gas-liquid refrigerant. The low-temperature low-pressure two-phase gas-liquid refrigerant from the expansion valve 24a, the expansion valve 24b, and the expansion valve 24c flows into the indoor heat exchanger 21 a, the indoor heat exchanger 21 b, and the indoor heat exchanger 21 c, exchanges heat with indoor air, and becomes a high-temperature low-pressure gas refrigerant.

A high-temperature high-pressure gas refrigerant discharged from the compressor 12b of the outdoor unit 10B flows through the four-way valve 13b into the outdoor heat exchanger 14b. The high-temperature high-pressure gas refrigerant exchanges heat with outdoor air in the outdoor heat exchanger 14b and becomes a low-temperature high-pressure liquid refrigerant. The low-temperature high-pressure liquid refrigerant from the outdoor heat exchanger 14b flows through the liquid pipe joint 17b and the liquid pipe 43b and joins the refrigerant flowing from the outdoor unit 10A at the branch joint 65.

The high-temperature low-pressure gas refrigerant from the indoor heat exchanger 21 a flows through the gas pipe joint 22a, the gas pipe 32a, the branch joint 50a, the main gas pipe 30b, and the branch joint 60.

The high-temperature low-pressure gas refrigerant from the indoor heat exchanger 21 b flows through the gas pipe joint 22b, the gas pipe 32b, the branch joint 50b, the gas pipe 31, the branch joint 50a, the main gas pipe 30b, and the branch joint 60.

The high-temperature low-pressure gas refrigerant from the indoor heat exchanger 21 c flows through the gas pipe joint 22c, the gas pipe 32c, the gas pipe 32c, the branch joint 50b, the gas pipe 31, the branch joint 50a, the main gas pipe 30b, and the branch joint 60.

The high-temperature low-pressure gas refrigerant is divided by the branch joint 60 into the gas pipe 33a and the gas pipe 33b.

The high-temperature low-pressure gas refrigerant flowing through the gas pipe 33a flows through the gas pipe joint 16a and the four-way valve 13a into the accumulator 11 a.

The high-temperature low-pressure gas refrigerant flowing through the gas pipe 33b flows through the gas pipe joint 16b and the four-way valve 13b into the accumulator 11 b.

In heating operation, a high-temperature high-pressure gas refrigerant flows through the main gas pipe 30b, and in cooling operation, a high-temperature low-pressure gas refrigerant flows through the main gas pipe 30b.

In heating operation, a low-temperature high-pressure two-phase gas-liquid refrigerant flows through the main liquid pipe 40b, and in cooling operation, low-temperature high-pressure liquid refrigerant flows through the main liquid pipe 40b.

In Embodiment 3, the outer diameter and thickness of the gas pipe 30b and the liquid pipe 40b satisfy the following conditions.

Outer diameter φ (mm) of main gas pipe 30b > Outer diameter φ (mm) of gas pipe 31
Outer diameter φ (mm) of main gas pipe 30b > Outer diameter φ (mm) of gas pipe 33a
Outer diameter φ (mm) of main gas pipe 30b > Outer diameter φ (mm) of gas pipe 33b
Thickness (mm) of main gas pipe 30b > Thickness (mm) of gas pipe 31
Thickness (mm) of main gas pipe 30b > Thickness (mm) of gas pipe 33a
Thickness (mm) of main gas pipe 30b > Thickness (mm) of gas pipe 33b
Outer diameter φ (mm) of main liquid pipe 40b > Outer diameter φ (mm) of liquid pipe 41
Outer diameter φ (mm) of main liquid pipe 40b > Outer diameter φ (mm) of liquid pipe 43a
Outer diameter φ (mm) of main liquid pipe 40b > Outer diameter φ (mm) of liquid pipe 43b
Thickness (mm) of main liquid pipe 40b > Thickness (mm) of liquid pipe 41
Thickness (mm) of main liquid pipe 40b > Thickness (mm) of liquid pipe 43a
Thickness (mm) of main liquid pipe 40b > Thickness (mm) of liquid pipe 43b

The amount of refrigerant flowing through the main gas pipe 30a into the gas pipe 31 is decreased by the amount of refrigerant flowing through the branch joints 50a and 55a into the indoor unit 20A. Thus, the gas pipe 31 can have a smaller outer diameter and thickness than the main gas pipe 30a. Refrigerant from the outdoor unit 10A and refrigerant from the outdoor unit 10B come together at the branch joints 60 and 65, thus increasing the refrigerant flow rate in the main gas pipe 30b and the main liquid pipe 40b. The main gas pipe 30b and the main liquid pipe 40b must therefore have a larger outer diameter and thickness than the gas pipes 33a and 33b and the liquid pipes 43a and 43b.

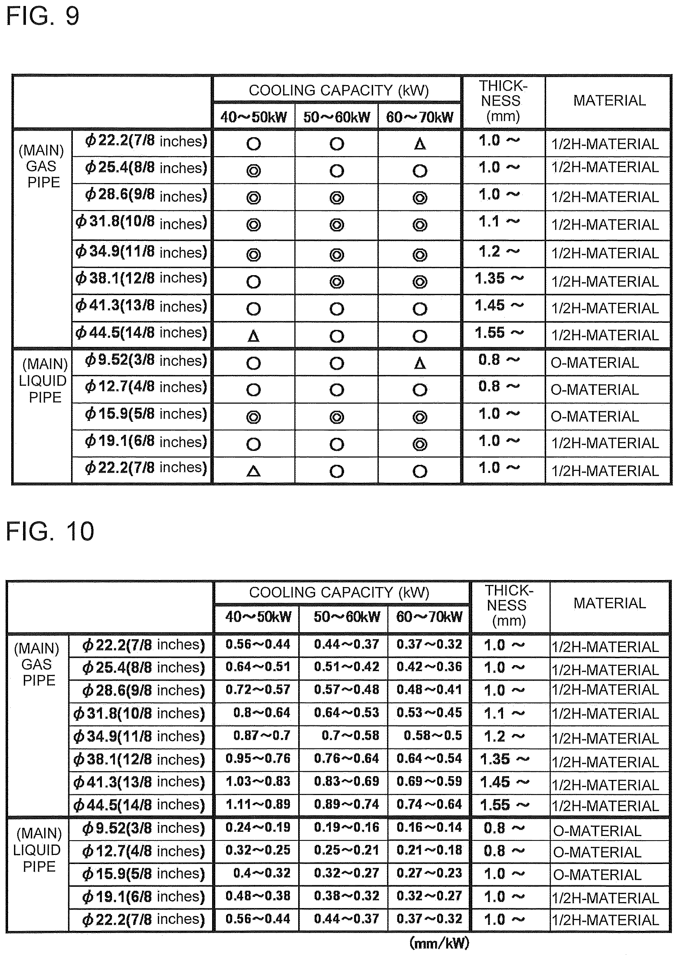

Fig. 9 shows the outer diameters φ (mm) of the main gas pipe 30b and the main liquid pipe 40b usable depending on the cooling capacities of the outdoor unit 10A and the outdoor unit 10B according to Embodiment 3. Like Figs. 4 and 7, Fig. 10 shows the ratios (mm/kW) of the outer diameters of the main gas pipe 30b and the main liquid pipe 40b to the total cooling capacity of the outdoor unit 10A and the outdoor unit 10B.

When the indoor units 20A, 20B, and 20C are coupled together, and the outdoor unit 10A has low cooling capacity, the outdoor unit 10B as well as the outdoor unit 10A is coupled to the indoor units 20A, 20B, and 20C. In the presence of at least two outdoor units as in the heat pump apparatus 300, the design pressure depends on the total cooling capacity of the outdoor unit 10A and the outdoor unit 10B. Thus, the outer diameter and thickness of the main gas pipe 30b and the main liquid pipe 40b can be chosen on the basis of the total cooling capacity of the outdoor unit 10A and the outdoor unit 10B.

For example, the total cooling capacity of the outdoor unit 10A having a cooling capacity of 20 kW and the outdoor unit 10B having a cooling capacity of 30 kW is 50 kW.

(Outer Diameter of Main Gas Pipe 30b of Heat pump apparatus 300)

When the total cooling capacity of the outdoor units 10A and 10B is 40 kW or more and less than 50 kW, 25.4, 28.6, 31.8, and 34.9 mm are most desirable (corresponding to "double circle"), 22.2, 38.1, and 41.3 mm are more desirable (corresponding to "circle"), and 44.5 mm is desirable (corresponding to "triangle").

When the total cooling capacity of the outdoor units 10A and 10B is 50 kW or more and less than 60 kW, 28.6, 31.8, 34.9, and 38.1 mm are most desirable (corresponding to "double circle"), and 22.2, 25.4, 41.3, and 44.5 mm are more desirable (corresponding to "circle").

When the total cooling capacity of the outdoor units 10A and 10B is 60 kW or more and less than 70 kW, 28.6, 31.8, 34.9, and 38.1 mm are most desirable (corresponding to "double circle"), 25.4, 41.3, and 44.5 mm are more desirable (corresponding to "circle"), and 22.2 mm is desirable (corresponding to "triangle").

(Outer Diameter of Main Liquid Pipe 40b of Heat pump apparatus 200)

When the total cooling capacity of the outdoor units 10A and 10B is 40 kW or more and less than 50 kW, 15.9 mm is most desirable (corresponding to "double circle"), 9.52, 12.7, and 19.1 mm are more desirable (corresponding to "circle"), and 22.2 mm is desirable (corresponding to "triangle").

When the total cooling capacity of the outdoor units 10A and 10B is 50 kW or more and less than 60 kW, 15.9 mm is most desirable (corresponding to "double circle"), and 9.52, 12.7, 19.1, and 22.2 mm are more desirable (corresponding to "circle").

When the total cooling capacity of the outdoor units 10A and 10B is 60 kW or more and less than 70 kW, 15.9 and 19.1 mm are most desirable (corresponding to "double circle"), 12.7 and 22.2 mm are more desirable (corresponding to "circle"), and 9.52 mm is desirable (corresponding to "triangle").

(Fig. 10)

The outer diameters of pipes to be desirably used as the main gas pipe 30b and the main liquid pipe 40b increase with increasing cooling capacity. Fig. 10 shows the ratios (mm/kW) of the outer diameters of the main gas pipe 40a and the main liquid pipe 40a to cooling capacity.

The ratio (mm/kW) of the outer diameter of the main gas pipe 30b to cooling capacity desirably ranges from 0.32 to 1.11 (corresponding to "double circle", "circle", or "triangle"), more desirably 0.36 to 1.03 (corresponding to "double circle" or "circle"), most desirably 0.41 to 1.03 (corresponding to "double circle"). Thus, the outer diameter of the main gas pipe 30b is chosen such that the ratio (mm/kW) of the outer diameter to the cooling capacity of the outdoor unit 10 ranges from 0.32 to 1.11.

Likewise, the ratio (mm/kW) of the outer diameter of the main liquid pipe 40b to cooling capacity desirably ranges from 0.14 to 0.56 (corresponding to "double circle", "circle", or "triangle"), more desirably 0.16 to 0.48 (corresponding to "double circle" or "circle"), most desirably 0.23 to 0.40 (corresponding to "double circle"). Thus, the outer diameter of the main liquid pipe 40a is chosen such that the ratio (mm/kW) of the outer diameter to the cooling capacity of the outdoor unit 10 ranges from 0.14 to 1.56.

Although the heat pump apparatus 300 described in Embodiment 3 includes three indoor units 20A, 20B, and 20C coupled to two outdoor units 10A and 10B, the number of indoor units may be more than three. Each of the gas pipe 32c and the liquid pipe 42c is provided with an additional branch joint, and the branch joint is coupled to a gas pipe and a liquid pipe. The gas pipe and liquid pipe are coupled to an indoor unit. In this manner, an indoor unit can be added by retrofitting a gas pipe and a liquid pipe with a branch joint.

When four or more indoor units are installed, two outdoor units may have insufficient cooling capacity. In such a case, an outdoor unit may be added. For example, when three outdoor units are used, each of the main gas pipe 30b and the main liquid pipe 40b is provided with an additional branch joint, and the branch joint is coupled to a gas pipe and a liquid pipe. The gas pipe and liquid pipe are coupled to an indoor unit.

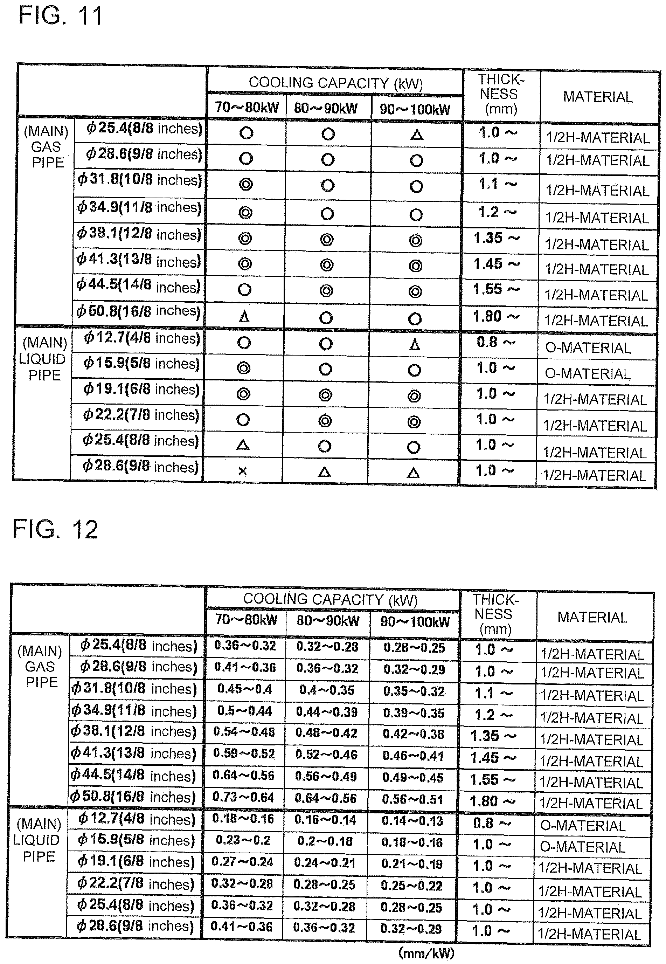

Fig. 11 shows the outer diameters φ (mm) of a main gas pipe and a main liquid pipe in the case that a plurality of outdoor units have a total cooling capacity of 70 kW or more. Fig. 12 shows the ratios (mm/kW) of the outer diameters of a main gas pipe and a main liquid pipe to the total cooling capacity of a plurality of outdoor units. For example, the total cooling capacity of three outdoor units each having a cooling capacity of 30 kW is 90 kW.

(Outer Diameter of Main Gas Pipe)

When the total cooling capacity of a plurality of outdoor units is 70 kW or more and less than 80 kW, 31.8, 34.9, 38.1, and 41.3 mm are most desirable (corresponding to "double circle"), 25.4, 28.6, and 44.5 mm are more desirable (corresponding to "circle"), and 50.8 mm is desirable (corresponding to "triangle").

When the total cooling capacity of a plurality of outdoor units is 80 kW or more and less than 90 kW, 38.1, 41.3, and 44.5 mm are most desirable (corresponding to "double circle"), and 25.4, 28.6, 31.8, 34.9, and 50.8 mm are more desirable (corresponding to "circle").

When the total cooling capacity of a plurality of outdoor units is 90 kW or more and less than 100 kW, 38.1, 41.3, and 44.5 mm are most desirable (corresponding to "double circle"), 28.6, 31.8, 34.9, and 50.8 mm are more desirable (corresponding to "circle"), and 25.4 mm is desirable (corresponding to "triangle").

(Outer Diameter of Main Liquid Pipe)

When the total cooling capacity of a plurality of outdoor units is 70 kW or more and less than 80 kW, 15.9 and 19.1 mm are most desirable (corresponding to "double circle"), 12.7 and 22.2 mm are more desirable (corresponding to "circle"), and 25.4 mm is desirable (corresponding to "triangle").

When the total cooling capacity of a plurality of outdoor units is 80 kW or more and less than 90 kW, 19.1 and 22.2 mm are most desirable (corresponding to "double circle"), 12.7, 15.9, and 25.4 mm are more desirable (corresponding to "circle"), and 28.6 mm is desirable (corresponding to "triangle").

When the total cooling capacity of a plurality of outdoor units is 90 kW or more and less than 100 kW, 19.1 and 22.2 mm are most desirable (corresponding to "double circle"), 15.9 and 25.4 mm are more desirable (corresponding to "circle"), and 12.7 and 28.6 mm are desirable (corresponding to "triangle").

(Fig. 12)

The outer diameters of pipes to be desirably used as a main gas pipe and a main liquid pipe increase with increasing cooling capacity. Fig. 12 shows the ratios (mm/kW) of the outer diameters of a main gas pipe and a main liquid pipe to cooling capacity.

When the total cooling capacity of a plurality of outdoor units is 70 kW or more and less than 100 kW, the ratio (mm/kW) of the outer diameter of the main gas pipe to cooling capacity desirably ranges from 0.25 to 0.73 (corresponding to "double circle", "circle", or "triangle"), more desirably 0.28 to 0.64 (corresponding to "double circle" or "circle"), most desirably 0.38 to 0.59 (corresponding to "double circle"). Thus, the outer diameter of a main gas pipe is chosen such that the ratio (mm/kW) of the outer diameter to the total cooling capacity of outdoor units ranges from 0.25 to 0.73.

Likewise, the ratio (mm/kW) of the outer diameter of a main liquid pipe to cooling capacity desirably ranges from 0.13 to 0.36 (corresponding to "double circle", "circle", or "triangle"), more desirably 0.14 to 0.32 (corresponding to "double circle" or "circle"), most desirably 0.19 to 0.28 (corresponding to "double circle"). Thus, the outer diameter of a main liquid pipe is chosen such that the ratio (mm/kW) of the outer diameter to the total cooling capacity of outdoor units ranges from 0.13 to 0.36.

Thus, an HFC refrigerant, particularly HFO-1234yf in the case of HFO refrigerants or HFC32 in the case of HFC refrigerants, is mixed to suppress the decomposition reaction of HFO-1123. The optimum outer diameters of pipes to be used as the main gas pipe 30b and the main liquid pipe 40b can be chosen on the assumption that the decomposition reaction of HFO-1123 is suppressed, and this can reduce the cost of the heat pump apparatus 300.

(Thickness of Pipe)

The thickness of pipes used in the present invention (Embodiments 1 to 3) will be described below.

It is desirable that a pipe having an outer diameter in the range of 6.35 to 12.7 mm be made of an O-material having a thickness of 0.8 mm or more.

A pipe having an outer diameter of 15.9 mm is preferably made of an O-material having a thickness of 1.0 mm or more.

It is desirable that a pipe having an outer diameter in the range of 19.1 to 28.6 mm be made of a 1/2H-material having a thickness of 1.0 mm or more.

It is desirable that a pipe having an outer diameter of 31.8 mm be made of a 1/2H-material having a thickness of 1.1 mm or more.

It is desirable that a pipe having an outer diameter of 34.9 mm be made of a 1/2H-material having a thickness of 1.2 mm or more.

It is desirable that a pipe having an outer diameter of 38.1 mm be made of a 1/2H-material having a thickness of 1.35 mm or more.

It is desirable that a pipe having an outer diameter of 41.3 mm be made of a 1/2H-material having a thickness of 1.45 mm or more.

It is desirable that a pipe having an outer diameter of 44.5 mm be made of a 1/2H-material having a thickness of 1.55 mm or more.

It is desirable that a pipe having an outer diameter in the range of 50.8 to 54.0 mm be made of a 1/2H-material having a thickness of 1.80 mm or more.

O-materials are "materials in the softest state after annealing", and 1/2H-materials are "materials work hardened by cold working".

The upper limit of the thickness is 1.3 times the lower limit of the thickness. For example, for a pipe having an outer diameter of 6.35 mm, the lower limit of the thickness is 0.8 mm, and the upper limit of the thickness is 1.04 mm (0.8 mm x 1.3). Thus, the thickness of a pipe having an outer diameter of 6.35 mm ranges from 0.8 to 10.4 mm.

If pipes widely used with R410A have a thickness chosen as described above for their outer diameters, the pipes can be applied to heat pump apparatus in which HFO-1123 and an HFC refrigerant circulate. This obviates the need to produce a special pipe having a large thickness designed for HFO-1123. Thus, a heat pump apparatus can be produced without increased pipe costs.

(Gas Pipe, Liquid Pipe, Main Gas Pipe, and Main Liquid Pipe)

The term "gas pipe", as used herein, refers to a pipe through which a high-temperature high-pressure gas refrigerant discharged from a compressor flows before entering a condenser. The term "liquid pipe", as used herein, refers to a pipe through which a low-temperature high-pressure liquid refrigerant from an evaporator or a low-temperature low-pressure two-phase gas-liquid refrigerant passing through an expansion valve flows.

The terms "main gas pipe" and "main gas pipe" in Embodiments 2 and 3 refer to a gas pipe and a liquid pipe having the largest outer diameter out of a plurality of gas pipes coupled with a branch joint.

For a heat pump apparatus including a plurality of outdoor units, the outer diameter of a pipe coupled to a branch joint at which refrigerant from an outdoor unit or indoor unit joins is larger than the outer diameters of pipes coupled to a gas pipe joint and a liquid pipe joint of a particular outdoor unit. Thus, in a heat pump apparatus including a plurality of outdoor units, a pipe having the largest outer diameter is referred to as a main pipe.

In the heat pump apparatus 100, 200, and 300 described in the present invention (Embodiments 1 to 3), an outdoor unit and an indoor unit are coupled together with a gas pipe and a liquid pipe, and refrigerant flows into an indoor unit. However, a heat pump apparatus may include an intermediate device in which an outdoor unit is coupled to an intermediate unit, and the intermediate unit is coupled to an indoor unit.

The intermediate device includes an intermediate heat exchanger, and refrigerant from an outdoor unit exchanges heat with a heat medium, such as water or brine, in the intermediate heat exchanger. After heat exchange with the refrigerant, the heat medium flows into an indoor unit. The refrigerant does not flow into the indoor unit. In such a heat pump apparatus including an intermediate device, a gas pipe and a liquid pipe refers to pipes between an outdoor unit and the intermediate device.

The phrase "a heat pump apparatus in which refrigerant circulates between an indoor unit and an outdoor unit", as used herein, includes "a heat pump apparatus equipped with an intermediate unit in which refrigerant circulates between the intermediate unit and an outdoor unit", including a heat pump apparatus in which a heat medium, such as water or brine, rather than refrigerant, flows into an indoor unit.

(Specific Examples of Refrigerating Machine Oil)

Specific examples of ester lubricating oil and ether lubricating oil will be described below.

Examples of the ester lubricating oil include dibasic acid ester oil, polyol ester oil, complex ester oil, and polyol carbonate oil.

The dibasic acid ester oil is preferably an ester between a dibasic acid having 5 to 10 carbon atoms (glutaric acid, adipic acid, pimelic acid, suberic acid, azelaic acid, or sebacic acid) and a monohydric alcohol having a linear or branched alkyl group and having 1 to 15 carbon atoms (methanol, ethanol, propanol, butanol, pentanol, hexanol, heptanol, octanol, nonanol, decanol, undecanol, dodecanol, tridecanol, tetradecanol, or pentadecanol). More specifically, the dibasic acid ester oil is ditridecyl glutarate, di(2-ethylhexyl) adipate, diisodecyl adipate, ditridecyl adipate, or di(3-ethylhexyl) sebacate.

The polyol ester oil is preferably an ester between a diol (ethylene glycol, 1,3-propanediol, propylene glycol, 1,4-butanediol, 1,2-butanediol, 1,5-pentadiol, neopentyl glycol, 1,7-heptanediol, or 1,12-dodecanediol) or a polyol having 3 to 20 hydroxy groups (trimethylolethane, trimethylolpropane, trimethylolbutane, pentaerythritol, glycerin, sorbitol, sorbitan, or a sorbitol glycerin condensate) and a fatty acid having 6 to 20 carbon atoms (a linear or branched fatty acid, such as hexanoic acid, heptanoic acid, octanoic acid, nonanoic acid, decanoic acid, undecanoic acid, dodecanoic acid, eicosanoic acid, or oleic acid, or a so-called neo acid having a quaternary $\alpha$ carbon atom).

The polyol ester oil may have a free hydroxy group.

The polyol ester oil is preferably an ester (trimethylolpropane tripelargonate, pentaerythritol 2-ethylhexanoate, or pentaerythritol tetrapelargonate) of a hindered alcohol (neopentyl glycol, trimethylolethane, trimethylolpropane, trimethylolbutane, or pentaerythritol).

The complex ester oil refers to an ester between a fatty acid and a dibasic acid and a monohydric alcohol and a polyol. The fatty acid, dibasic acid, monohydric alcohol, and polyol may be those described above.

The polyol carbonate oil refers to an ester between carbonic acid and a polyol.

The polyol may be a diol or polyol described above. The polyol carbonate oil may be a product of ring-opening polymerization of a cyclic alkylene carbonate.

The ether lubricating oil may be a poly(vinyl ether) oil or a polyoxyalkylene lubricating oil.

The poly(vinyl ether) oil may be a polymerization product of a vinyl ether monomer, such as an alkyl vinyl ether, or a copolymer of a vinyl ether monomer and a hydrocarbon monomer having an olefinic double bond.

These vinyl ether monomers may be used alone or in combination.

Examples of the hydrocarbon monomer having an olefinic double bond include ethylene, propylene, butenes, pentenes, hexenes, heptenes, octenes, diisobutylene, triisobutylene, styrene, $\alpha$-methylstyrene, and alkyl substituted styrenes. These hydrocarbon monomers having an olefinic double bond may be used alone or in combination.

The poly(vinyl ether) copolymer may be a block or random copolymer.

These poly(vinyl ether)s may be used alone or in combination.

Industrial Applicability

The present invention can be utilized in air-conditioning apparatus and freezing devices that utilize a heat pump cycle.

Reference Signs List

10 outdoor unit 20 indoor unit 30 gas pipe 30a main gas pipe 30b main gas pipe 40 liquid pipe 40a main liquid pipe 40b main liquid pipe

**Claims**

1. A heat pump apparatus comprising:

 an indoor unit;
 an outdoor unit having a cooling capacity (kW) in the range of 2.2 to 9.5 kW;
 a refrigerant circulating between the indoor unit and the outdoor unit, the refrigerant being a mixed refrigerant of HFO-1123 and an HFC refrigerant other than HFO-1123;
 a gas pipe communicating between the indoor unit and the outdoor unit; and
 a liquid pipe communicating between the indoor unit and the outdoor unit,

 the gas pipe and the outdoor unit being configured to satisfy the following formula (1), and the liquid pipe and the outdoor unit being configured to satisfy the following formula (2):

 (1) $1.00 \leq$ an outer diameter $\phi$ (mm) of the gas pipe/the cooling capacity (kW) of the outdoor unit $\leq 5.77$
 (2) $0.67 \leq$ an outer diameter $\phi$ (mm) of the liquid pipe/the cooling capacity (kW) the of outdoor unit $\leq 5.77$

2. A heat pump apparatus comprising:

 a plurality of indoor units;
 at least one outdoor unit having a cooling capacity (kW) of 10 kW or more and less than 40 kW;
 a refrigerant circulating between the plurality of indoor units and the at least one outdoor unit, the refrigerant being a mixed refrigerant of HFO-1123 and an HFC refrigerant other than HFO-1123;
 a main gas pipe communicating between the plurality of indoor units and the at least one outdoor unit; and
 a main liquid pipe communicating between the plurality of indoor units and the at least one outdoor unit,

 the main gas pipe and the at least one outdoor unit being configured to satisfy the following formula (1), and the liquid pipe and the at least one outdoor unit being configured to satisfy the following formula (2):

 (1) $0.40 \leq$ an outer diameter $\phi$ (mm) of the main gas pipe/the cooling capacity (kW) of the at least one outdoor unit $\leq 3.49$
 (2) $0.16 \leq$ an outer diameter $\phi$ (mm) of the main liquid pipe/the cooling capacity (kW) of the at least one outdoor unit $\leq 1.91$

3. A heat pump apparatus comprising:

 a plurality of indoor units;
 at least two outdoor units, the at least two outdoor units having a total cooling capacity (kW) of 40 kW or more and less than 70 kW;
 a refrigerant circulating between the plurality of indoor units and the at least two outdoor units, the refrigerant being a mixed refrigerant of HFO-1123 and an HFC refrigerant other than HFO-1123;
 a main gas pipe communicating between the plurality of indoor units and the at least two outdoor units; and
 a main liquid pipe comunicating between the plurality of indoor units and the at least two outdoor units,

 the main gas pipe and the at least two outdoor units being configured to satisfy the folloinwg formula (1), and the main liquid pipe and the at least two outdoor units being confiugred to satisfy the following formula (2):

 (1) $0.32 \leq$ an outer diameter $\phi$ (mm) of the main gas pipe/ the total cooling capacity (kW) of the at least two outdoor units $\leq 1.11$
 (2) $0.14 \leq$ an outer diameter $\phi$ (mm) of the main liquid pipe/the total cooling capacity (kW) of the at least two outdoor units $\leq 0.56$

4. A heat pump apparatus comprising:

 a plurality of indoor units;
 at least three outdoor units having a total cooling capacity (kW) of 70 kW or more and less than 100 kW;
 a refrigerant circulating between the plurality of indoor units and the at least three outdoor units, the refrigerant being a mixed refrigerant of HFO-1123 and an HFC refrigerant other than HFO-1123;
 a main gas pipe communicating between the plurality of indoor units and the at least three outdoor units; and
 a liquid pipe communicating between the plurality of indoor units and the at least three outdoor units,

the main gas pipe and the at least three outdoor units being configured to satisfy the following formula (1), and the liquid pipe and the at least three outdoor units being confiugured to satisfy the following formula (2):

(1) 0.25 ≤ an outer diameter φ (mm) of the main gas pipe /the total cooling capacity (kW) of the plurality of indoor units ≤ 0.73
(2) 0.13 ≤ an outer diameter φ (mm) of the liquid pipe /the total cooling capacity (kW) of the plurality of indoor units ≤ 0.36

5. The heat pump apparatus of any one of Claims 1 to 4, wherein the refrigerant is a mixed refrigerant of HFO-1123 and HFO1234yf or a mixed refrigerant of HFO-1123 and HFO32.

6. The heat pump apparatus of Claim 5, wherein the refrigerant is a mixed refrigerant of HFO-1123 and HFO32.

FIG. 1

FIG. 2

$$CF_2 = CHF \longrightarrow 1/2\,CF_4 + 2/3\,C + HF + 44.7kcal$$

## FIG. 3

| | | COOLING CAPACITY (kW) | | | | | | | | | THICK-NESS (mm) | MATERIAL |
|---|---|---|---|---|---|---|---|---|---|---|---|---|
| | | 2.2 | 2.5 | 2.8 | 3.6 | 4.0 | 5.6 | 6.3 | 7.1 | 9.5 | | |
| GAS PIPE | $\phi$6.35(2/8 inches) | O | O | O | O | O | O | △ | × | × | 0.8~ | O-MATERIAL |
| | $\phi$9.52(3/8 inches) | ◎ | ◎ | ◎ | ◎ | ◎ | ◎ | O | O | O | 0.8~ | O-MATERIAL |
| | $\phi$12.7(4/8 inches) | △ | △ | O | O | O | O | ◎ | ◎ | ◎ | 0.8~ | O-MATERIAL |
| | $\phi$15.9(5/8 inches) | × | × | △ | △ | △ | △ | O | O | O | 1.0~ | O-MATERIAL |
| LIQUID PIPE | $\phi$6.35(2/8 inches) | ◎ | ◎ | ◎ | ◎ | ◎ | ◎ | ◎ | O | O | 0.8~ | O-MATERIAL |
| | $\phi$9.52(3/8 inches) | O | O | O | O | O | O | O | ◎ | ◎ | 0.8~ | O-MATERIAL |
| | $\phi$12.7(4/8 inches) | △ | △ | △ | △ | △ | △ | △ | O | O | 0.8~ | O-MATERIAL |

## FIG. 4

| | | COOLING CAPACITY (kW) | | | | | | | | | THICK-NESS (mm) | MATERIAL |
|---|---|---|---|---|---|---|---|---|---|---|---|---|
| | | 2.2 | 2.5 | 2.8 | 3.6 | 4.0 | 5.6 | 6.3 | 7.1 | 9.5 | | |
| GAS PIPE | φ6.35(2/8 inches) | 2.89 | 2.54 | 2.27 | 1.76 | 1.59 | 1.13 | 1.01 | 0.89 | 0.67 | 0.8~ | O-MATERIAL |
| | φ9.52(3/8 inches) | 4.33 | 3.81 | 3.40 | 2.64 | 2.38 | 1.70 | 1.51 | 1.34 | 1.00 | 0.8~ | O-MATERIAL |
| | φ12.7(4/8 inches) | 5.77 | 5.08 | 4.54 | 3.53 | 3.18 | 2.27 | 2.02 | 1.79 | 1.34 | 0.8~ | O-MATERIAL |
| | φ15.9(5/8 inches) | 7.23 | 6.36 | 5.68 | 4.42 | 3.98 | 2.84 | 2.52 | 2.24 | 1.67 | 1.0~ | O-MATERIAL |
| LIQUID PIPE | φ6.35(2/8 inches) | 2.89 | 2.54 | 2.27 | 1.76 | 1.59 | 1.13 | 1.01 | 0.89 | 0.67 | 0.8~ | O-MATERIAL |
| | φ9.52(3/8 inches) | 4.33 | 3.81 | 3.40 | 2.64 | 2.38 | 1.70 | 1.51 | 1.34 | 1.00 | 0.8~ | O-MATERIAL |
| | φ12.7(4/8 inches) | 5.77 | 5.08 | 4.54 | 3.53 | 3.18 | 2.27 | 2.02 | 1.79 | 1.34 | 0.8~ | O-MATERIAL |

(mm/kW)

## FIG. 5

## FIG. 6

| | | COOLING CAPACITY (kW) | | | THICK-NESS (mm) | MATERIAL |
|---|---|---|---|---|---|---|
| | | 10~20kW | 20~30kW | 30~40kW | | |
| (MAIN) GAS PIPE | φ15.9(5/8 inches) | O | O | △ | 1.0 ~ | O-MATERIAL |
| | φ19.1(6/8 inches) | ◎ | O | O | 1.0 ~ | 1/2H-MATERIAL |
| | φ22.2(7/8 inches) | ◎ | ◎ | O | 1.0 ~ | 1/2H-MATERIAL |
| | φ25.4(8/8 inches) | ◎ | ◎ | ◎ | 1.0 ~ | 1/2H-MATERIAL |
| | φ28.6(9/8 inches) | O | ◎ | ◎ | 1.0 ~ | 1/2H-MATERIAL |
| | φ31.8(10/8 inches) | O | O | ◎ | 1.1 ~ | 1/2H-MATERIAL |
| | φ34.9(11/8 inches) | △ | O | O | 1.2 ~ | 1/2H-MATERIAL |
| (MAIN) LIQUID PIPE | φ6.35(2/8 inches) | O | O | △ | 0.8 ~ | O-MATERIAL |
| | φ9.52(3/8 inches) | ◎ | O | O | 0.8 ~ | O-MATERIAL |
| | φ12.7(4/8 inches) | ◎ | ◎ | ◎ | 0.8 ~ | O-MATERIAL |
| | φ15.9(5/8 inches) | O | O | ◎ | 1.0 ~ | O-MATERIAL |
| | φ19.1(6/8 inches) | △ | O | O | 1.0 ~ | 1/2H-MATERIAL |

## FIG. 7

| | | COOLING CAPACITY (kW) | | | THICK-NESS (mm) | MATERIAL |
|---|---|---|---|---|---|---|
| | | 10~20kW | 20~30kW | 30~40kW | | |
| (MAIN) GAS PIPE | φ15.9(5/8 inches) | 1.59~0.8 | 0.8~0.53 | 0.53~0.4 | 1.0 ~ | O-MATERIAL |
| | φ19.1(6/8 inches) | 1.91~0.96 | 0.96~0.64 | 0.64~0.48 | 1.0 ~ | 1/2H-MATERIAL |
| | φ22.2(7/8 inches) | 2.22~1.11 | 1.11~0.74 | 0.74~0.56 | 1.0 ~ | 1/2H-MATERIAL |
| | φ25.4(8/8 inches) | 2.54~1.27 | 1.27~0.85 | 0.85~0.64 | 1.0 ~ | 1/2H-MATERIAL |
| | φ28.6(9/8 inches) | 2.86~1.43 | 1.43~0.95 | 0.95~0.72 | 1.0 ~ | 1/2H-MATERIAL |
| | φ31.8(10/8 inches) | 3.18~1.59 | 1.59~1.06 | 1.06~0.8 | 1.1 ~ | 1/2H-MATERIAL |
| | φ34.9(11/8 inches) | 3.49~1.75 | 1.75~1.16 | 1.16~0.87 | 1.2 ~ | 1/2H-MATERIAL |
| (MAIN) LIQUID PIPE | φ6.35(2/8 inches) | 0.64~0.32 | 0.32~0.21 | 0.21~0.16 | 0.8 ~ | O-MATERIAL |
| | φ9.52(3/8 inches) | 0.95~0.48 | 0.48~0.32 | 0.32~0.24 | 0.8 ~ | O-MATERIAL |
| | φ12.7(4/8 inches) | 1.27~0.64 | 0.64~0.42 | 0.42~0.32 | 0.8 ~ | O-MATERIAL |
| | φ15.9(5/8 inches) | 1.59~0.8 | 0.8~0.53 | 0.53~0.4 | 1.0 ~ | O-MATERIAL |
| | φ19.1(6/8 inches) | 1.91~0.96 | 0.96~0.64 | 0.64~0.48 | 1.0 ~ | 1/2H-MATERIAL |

(mm/kW)

## FIG. 8

## FIG. 9

| | | COOLING CAPACITY (kW) | | | THICK-NESS (mm) | MATERIAL |
|---|---|---|---|---|---|---|
| | | 40~50kW | 50~60kW | 60~70kW | | |
| (MAIN) GAS PIPE | $\phi$22.2(7/8 inches) | O | O | △ | 1.0 ~ | 1/2H-MATERIAL |
| | $\phi$25.4(8/8 inches) | ◎ | O | O | 1.0 ~ | 1/2H-MATERIAL |
| | $\phi$28.6(9/8 inches) | ◎ | ◎ | ◎ | 1.0 ~ | 1/2H-MATERIAL |
| | $\phi$31.8(10/8 inches) | ◎ | ◎ | ◎ | 1.1 ~ | 1/2H-MATERIAL |
| | $\phi$34.9(11/8 inches) | ◎ | ◎ | ◎ | 1.2 ~ | 1/2H-MATERIAL |
| | $\phi$38.1(12/8 inches) | O | ◎ | ◎ | 1.35 ~ | 1/2H-MATERIAL |
| | $\phi$41.3(13/8 inches) | O | O | O | 1.45 ~ | 1/2H-MATERIAL |
| | $\phi$44.5(14/8 inches) | △ | O | O | 1.55 ~ | 1/2H-MATERIAL |
| (MAIN) LIQUID PIPE | $\phi$9.52(3/8 inches) | O | O | △ | 0.8 ~ | O-MATERIAL |
| | $\phi$12.7(4/8 inches) | O | O | O | 0.8 ~ | O-MATERIAL |
| | $\phi$15.9(5/8 inches) | ◎ | ◎ | ◎ | 1.0 ~ | O-MATERIAL |
| | $\phi$19.1(6/8 inches) | O | O | ◎ | 1.0 ~ | 1/2H-MATERIAL |
| | $\phi$22.2(7/8 inches) | △ | O | O | 1.0 ~ | 1/2H-MATERIAL |

## FIG. 10

| | | COOLING CAPACITY (kW) | | | THICK-NESS (mm) | MATERIAL |
|---|---|---|---|---|---|---|
| | | 40~50kW | 50~60kW | 60~70kW | | |
| (MAIN) GAS PIPE | $\phi$22.2(7/8 inches) | 0.56~0.44 | 0.44~0.37 | 0.37~0.32 | 1.0 ~ | 1/2H-MATERIAL |
| | $\phi$25.4(8/8 inches) | 0.64~0.51 | 0.51~0.42 | 0.42~0.36 | 1.0 ~ | 1/2H-MATERIAL |
| | $\phi$28.6(9/8 inches) | 0.72~0.57 | 0.57~0.48 | 0.48~0.41 | 1.0 ~ | 1/2H-MATERIAL |
| | $\phi$31.8(10/8 inches) | 0.8~0.64 | 0.64~0.53 | 0.53~0.45 | 1.1 ~ | 1/2H-MATERIAL |
| | $\phi$34.9(11/8 inches) | 0.87~0.7 | 0.7~0.58 | 0.58~0.5 | 1.2 ~ | 1/2H-MATERIAL |
| | $\phi$38.1(12/8 inches) | 0.95~0.76 | 0.76~0.64 | 0.64~0.54 | 1.35 ~ | 1/2H-MATERIAL |
| | $\phi$41.3(13/8 inches) | 1.03~0.83 | 0.83~0.69 | 0.69~0.59 | 1.45 ~ | 1/2H-MATERIAL |
| | $\phi$44.5(14/8 inches) | 1.11~0.89 | 0.89~0.74 | 0.74~0.64 | 1.55 ~ | 1/2H-MATERIAL |
| (MAIN) LIQUID PIPE | $\phi$9.52(3/8 inches) | 0.24~0.19 | 0.19~0.16 | 0.16~0.14 | 0.8 ~ | O-MATERIAL |
| | $\phi$12.7(4/8 inches) | 0.32~0.25 | 0.25~0.21 | 0.21~0.18 | 0.8 ~ | O-MATERIAL |
| | $\phi$15.9(5/8 inches) | 0.4~0.32 | 0.32~0.27 | 0.27~0.23 | 1.0 ~ | O-MATERIAL |
| | $\phi$19.1(6/8 inches) | 0.48~0.38 | 0.38~0.32 | 0.32~0.27 | 1.0 ~ | 1/2H-MATERIAL |
| | $\phi$22.2(7/8 inches) | 0.56~0.44 | 0.44~0.37 | 0.37~0.32 | 1.0 ~ | 1/2H-MATERIAL |

(mm/kW)

# FIG. 11

| | | COOLING CAPACITY (kW) | | | THICK-NESS (mm) | MATERIAL |
|---|---|---|---|---|---|---|
| | | 70~80kW | 80~90kW | 90~100kW | | |
| (MAIN) GAS PIPE | φ25.4(8/8 inches) | O | O | △ | 1.0 ~ | 1/2H-MATERIAL |
| | φ28.6(9/8 inches) | O | O | O | 1.0 ~ | 1/2H-MATERIAL |
| | φ31.8(10/8 inches) | ◎ | O | O | 1.1 ~ | 1/2H-MATERIAL |
| | φ34.9(11/8 inches) | ◎ | O | O | 1.2 ~ | 1/2H-MATERIAL |
| | φ38.1(12/8 inches) | ◎ | ◎ | ◎ | 1.35 ~ | 1/2H-MATERIAL |
| | φ41.3(13/8 inches) | ◎ | ◎ | ◎ | 1.45 ~ | 1/2H-MATERIAL |
| | φ44.5(14/8 inches) | O | ◎ | ◎ | 1.55 ~ | 1/2H-MATERIAL |
| | φ50.8(16/8 inches) | △ | O | O | 1.80 ~ | 1/2H-MATERIAL |
| (MAIN) LIQUID PIPE | φ12.7(4/8 inches) | O | O | △ | 0.8 ~ | O-MATERIAL |
| | φ15.9(5/8 inches) | ◎ | O | O | 1.0 ~ | O-MATERIAL |
| | φ19.1(6/8 inches) | ◎ | ◎ | ◎ | 1.0 ~ | 1/2H-MATERIAL |
| | φ22.2(7/8 inches) | O | ◎ | ◎ | 1.0 ~ | 1/2H-MATERIAL |
| | φ25.4(8/8 inches) | △ | O | O | 1.0 ~ | 1/2H-MATERIAL |
| | φ28.6(9/8 inches) | × | △ | △ | 1.0 ~ | 1/2H-MATERIAL |

# FIG. 12

| | | COOLING CAPACITY (kW) | | | THICK-NESS (mm) | MATERIAL |
|---|---|---|---|---|---|---|
| | | 70~80kW | 80~90kW | 90~100kW | | |
| (MAIN) GAS PIPE | φ25.4(8/8 inches) | 0.36~0.32 | 0.32~0.28 | 0.28~0.25 | 1.0 ~ | 1/2H-MATERIAL |
| | φ28.6(9/8 inches) | 0.41~0.36 | 0.36~0.32 | 0.32~0.29 | 1.0 ~ | 1/2H-MATERIAL |
| | φ31.8(10/8 inches) | 0.45~0.4 | 0.4~0.35 | 0.35~0.32 | 1.1 ~ | 1/2H-MATERIAL |
| | φ34.9(11/8 inches) | 0.5~0.44 | 0.44~0.39 | 0.39~0.35 | 1.2 ~ | 1/2H-MATERIAL |
| | φ38.1(12/8 inches) | 0.54~0.48 | 0.48~0.42 | 0.42~0.38 | 1.35 ~ | 1/2H-MATERIAL |
| | φ41.3(13/8 inches) | 0.59~0.52 | 0.52~0.46 | 0.46~0.41 | 1.45 ~ | 1/2H-MATERIAL |
| | φ44.5(14/8 inches) | 0.64~0.56 | 0.56~0.49 | 0.49~0.45 | 1.55 ~ | 1/2H-MATERIAL |
| | φ50.8(16/8 inches) | 0.73~0.64 | 0.64~0.56 | 0.56~0.51 | 1.80 ~ | 1/2H-MATERIAL |
| (MAIN) LIQUID PIPE | φ12.7(4/8 inches) | 0.18~0.16 | 0.16~0.14 | 0.14~0.13 | 0.8 ~ | O-MATERIAL |
| | φ15.9(5/8 inches) | 0.23~0.2 | 0.2~0.18 | 0.18~0.16 | 1.0 ~ | O-MATERIAL |
| | φ19.1(6/8 inches) | 0.27~0.24 | 0.24~0.21 | 0.21~0.19 | 1.0 ~ | 1/2H-MATERIAL |
| | φ22.2(7/8 inches) | 0.32~0.28 | 0.28~0.25 | 0.25~0.22 | 1.0 ~ | 1/2H-MATERIAL |
| | φ25.4(8/8 inches) | 0.36~0.32 | 0.32~0.28 | 0.28~0.25 | 1.0 ~ | 1/2H-MATERIAL |
| | φ28.6(9/8 inches) | 0.41~0.36 | 0.36~0.32 | 0.32~0.29 | 1.0 ~ | 1/2H-MATERIAL |

(mm/kW)

## INTERNATIONAL SEARCH REPORT

International application No.

PCT/JP2014/001483

| A. CLASSIFICATION OF SUBJECT MATTER |
|---|
| $F25B1/00(2006.01)i$, $C09K5/04(2006.01)i$ |

According to International Patent Classification (IPC) or to both national classification and IPC

| B. FIELDS SEARCHED |
|---|

Minimum documentation searched (classification system followed by classification symbols)
F25B1/00, C09K5/04

Documentation searched other than minimum documentation to the extent that such documents are included in the fields searched
Jitsuyo Shinan Koho    1922-1996   Jitsuyo Shinan Toroku Koho   1996-2014
Kokai Jitsuyo Shinan Koho  1971-2014   Toroku Jitsuyo Shinan Koho   1994-2014

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y | JP 2013-200090 A  (Hitachi Appliances, Inc.), 03 October 2013 (03.10.2013), entire text; all drawings (particularly, claims 1 to 4; paragraphs [0008] to [0012], [0021] to [0061]; fig. 1 to 5) (Family: none) | 1-6 |
| Y | JP 2001-248941 A  (Daikin Industries, Ltd.), 14 September 2001 (14.09.2001), entire text; all drawings (particularly, claims 1 to 3; paragraphs [0008] to [0010], [0025] to [0029]; fig. 2 to 3) & US 2003/0056525 A1    & US 2004/0129006 A1 & EP 1243876 A1      & WO 2001/048427 A1 & AU 1893501 A       & AU 773584 B & CN 1415063 A | 1-6 |

| ☒ | Further documents are listed in the continuation of Box C. | ☐ | See patent family annex. |
|---|---|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 28 May, 2014 (28.05.14) | 10 June, 2014 (10.06.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2014/001483

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 10-122704 A  (Toshiba Corp.),<br>15 May 1998 (15.05.1998),<br>entire text; all drawings (particularly,<br>paragraph [0064]; fig. 2)<br>(Family: none) | 1-6 |
| Y | JP 2012-131994 A  (JX Nippon Oil & Energy<br>Corp.),<br>12 July 2012 (12.07.2012),<br>entire text; all drawings (particularly,<br>paragraphs [0127] to [0128], [0134] to [0135])<br>& US 2012/0132848 A1    & CN 102533392 A | 1-6 |
| Y | WO 2012/157764 A1  (Asahi Glass Co., Ltd.),<br>22 November 2012 (22.11.2012),<br>entire text; all drawings (particularly, claim<br>1; paragraphs [0006] to [0010], [0013], [0017])<br>(Family: none) | 1-6 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012157764 A1